# EUROPEAN PATENT APPLICATION

(11) **EP 4 485 160 A1**
(43) Date of publication of application: **01.01.2025**
(21) Application number: 23781165.8
(22) Date of filing: 14.02.2023
(51) Int. Cl.: G06F 3/04845, G06F 3/04817, G06F 3/0482, G06F 3/0487, G06F 3/01, G06F 1/16

(54) **ELECTRONIC DEVICE COMPRISING FLEXIBLE DISPLAY, AND OPERATING METHOD THEREFOR**

(30) Priority: 28.03.2022 KR 20220038338; 13.05.2022 KR 20220059075
(71) Applicant: Samsung Electronics Co., Ltd, Suwon-si, Gyeonggi-do 16677 (KR)
(72) Inventor: KIM, Sangheon, Suwon-si, Gyeonggi-do 16677 (KR); LIM, Yeunwook, Suwon-si, Gyeonggi-do 16677 (KR)
(74) Representative: Walaski, Jan Filip
(86) International application number: PCT/KR2023/002159
(87) International publication number: WO 2023/191306

(57) **Abstract**

Various embodiments of the present invention relate to an electronic device comprising a flexible display. According to the various embodiments, the electronic device comprises a first housing, a second housing, a flexible display and at least one processor, wherein the at least one processor can display at least one object on the flexible display, detect an angle coefficient corresponding to the amount of change of the display area of the flexible display if a change of the display area of the flexible display is detected, and change, on the basis of the angle coefficient, the manner of displaying the at least one object displayed on the flexible display. Other embodiments are also possible.

## Description

### [Technical Field]

Various embodiments of the disclosure relate to an electronic device including a flexible display and an operation method thereof.

### [Background Art]

Electronic devices are getting slimmer and are being improved to emphasize the design and differentiate the functional elements. Electronic devices have been gradually transformed from a uniform oblong shape into various shapes. In addition, electronic devices may have a transformable structure capable of adjusting a display size so as to satisfy the portability and usability thereof. For example, an electronic device may have a structure (e.g., a rollable structure or a slidable structure) enabling a display area of a display to be changed by support of housings that slide with respect to each other.

### [Disclosure of Invention]

### [Technical Problem]

An electronic device may include a rollable electronic device (or a slidable electronic device) having an expandable and/or reducible display area of a display. For example, a display with an expandable and/or reducible display area may indicate a flexible display (or an expandable display or a stretchable display).

A rollable electronic device may include a first housing and a second housing which are coupled to be movable to each other by being at least partially fitted together. The rollable electronic device may change (e.g., expand or reduce) a display area of a flexible display supported by the first housing and the second housing according to sliding of the first housing and the second housing with respect to each other. For example, the flexible display may have a first display area, based on a slide-in state between the first housing and the second housing. The flexible display may have a second display area greater than the first display area, based on a slide-out state between the first housing and the second housing.

The rollable electronic device needs a method enabling a user to easily recognize the change of the display area of the flexible display.

Various embodiments of the disclosure provide a device and a method for, based on the change of a display area of a flexible display in an electronic device, controlling a display method for an object displayed on the flexible display.

### [Solution to Problem]

According to various embodiments, an electronic device may include a first housing, a second housing slidably coupled to the first housing, a flexible display which is disposed to be supported by the first housing and the second housing, and a display area of which is expanded during transition to a slide-out state from a slide-in state where at least a part of the first housing is accommodated in a space of the second housing, and at least one processor operatively connected to the flexible display, wherein the at least one processor is configured to display at least one object on the flexible display, in case that a change of the display area of the flexible display is detected, detect an angle coefficient corresponding to a variance of the display area of the flexible display, and change a display method for the at least one object displayed on the flexible display, based on the angle coefficient.

According to various embodiments, an operation method of an electronic device including a flexible display having a changeable display area may include displaying at least one object on the flexible display, in case that a change of the display area of the flexible display is detected, detecting an angle coefficient corresponding to a variance of the display area of the flexible display, and changing a display method for the at least one object displayed on the flexible display, based on the angle coefficient.

According to various embodiments, an electronic device may include a first housing, a second housing slidably coupled to the first housing, a flexible display which is disposed to be supported by the first housing and the second housing, and a display area of which is expanded during transition to a slide-out state from a slide-in state where at least a part of the first housing is accommodated in a space of the second housing, and at least one processor operatively connected to the flexible display, wherein the at least one processor is configured to display at least one object on the flexible display, in case that a change of the display area of the flexible display is detected, identify whether a display method for the at least one object is changeable, and in case that it is determined that the display method for the at least one object is changeable, change the display method for the at least one object, based on a variance of the display area of the flexible display.

### [Advantageous Effects of Invention]

According to various embodiments of the disclosure, an electronic device may control a display method for an object displayed on a flexible display, based on an angle coefficient corresponding to the change of a display area of the flexible display, so as to improve the experience of a user using the electronic device including the flexible display.

### [Brief Description of Drawings]

In relation to the description of drawings, the same or similar elements may be indicated by the same or similar reference signs.
FIG. 1 is a block diagram of an electronic device in a network environment according to various embodiments;
FIG. 2A is a diagram illustrating a front surface of an electronic device in a slide-in state according to various embodiments;
FIG. 2B is a diagram illustrating a rear surface of an electronic device in a slide-in state according to various embodiments;
FIG. 3A is a diagram illustrating a front surface of an electronic device in a slide-out state according to various embodiments;
FIG. 3B is a diagram illustrating a rear surface of an electronic device in a slide-out state according to various embodiments;
FIG. 4 is an exploded perspective view of an electronic device according to various embodiments;
FIG. 5 is a block diagram of an electronic device including a flexible display according to various embodiments;
FIG. 6 is a block diagram illustrating an example of a program according to various embodiments;
FIG. 7 is a flowchart for controlling a display method for an object, based on the change of a display area of a flexible display in an electronic device according to various embodiments;
FIG. 8 is a flowchart for detecting an angle coefficient in an electronic device according to various embodiments;
FIG. 9A shows an example of configuring a reference angle in an electronic device according to various embodiments;
FIG. 9B shows an example of detecting an angle coefficient corresponding to the change of a display area of a flexible display in an electronic device according to various embodiments;
FIG. 10 is a flowchart for changing a display method for an object, based on an angle coefficient in an electronic device according to various embodiments;
FIG. 11 shows an example of changing a display method for an item list in an electronic device according to various embodiments;
FIG. 12 shows an example of changing a display method for a widget in an electronic device according to various embodiments;
FIG. 13 shows an example of changing a display method for a wallpaper in an electronic device according to various embodiments;
FIG. 14 shows an example of changing a display method for a service screen of an application program in an electronic device according to various embodiments;
FIG. 15 shows an example of changing a display method for an item in an electronic device according to various embodiments;
FIG. 16 shows another example of changing a display method for a widget in an electronic device according to various embodiments;
FIG. 17 shows an example of displaying of information related to an external electronic device in an electronic device according to various embodiments;
FIG. 18 shows an example of changing a display method for a widget of a stacked structure in an electronic device according to various embodiments; and
FIG. 19 shows another example of changing a display method for a widget of a stacked structure in an electronic device according to various embodiments.

### [Mode for the Invention]

Hereinafter, various embodiments will be described in detail with reference to the accompanying drawings.

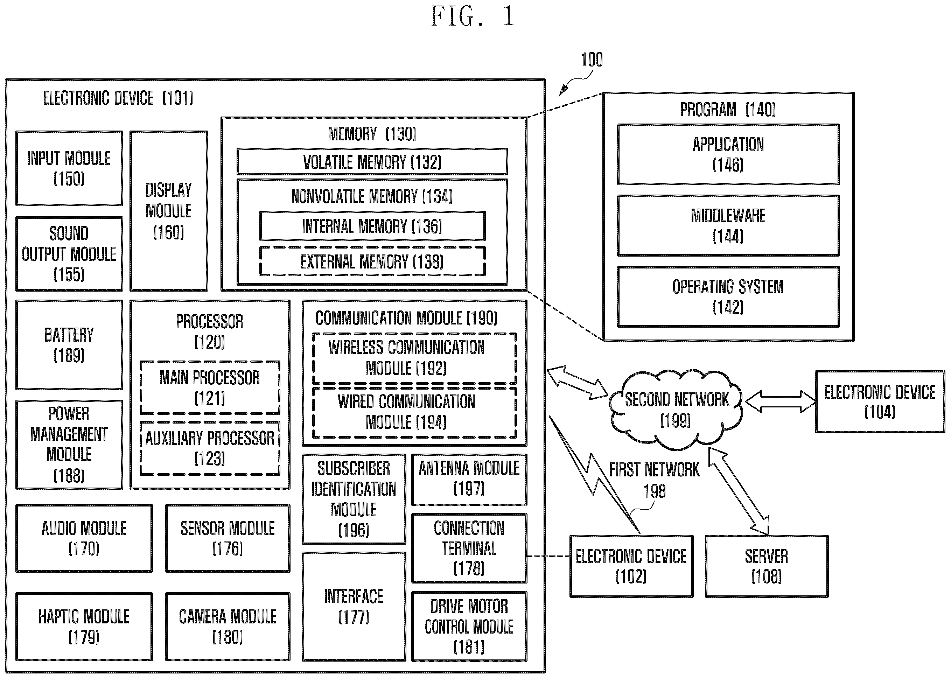

Fig. 1 is a block diagram illustrating an example electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to one embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

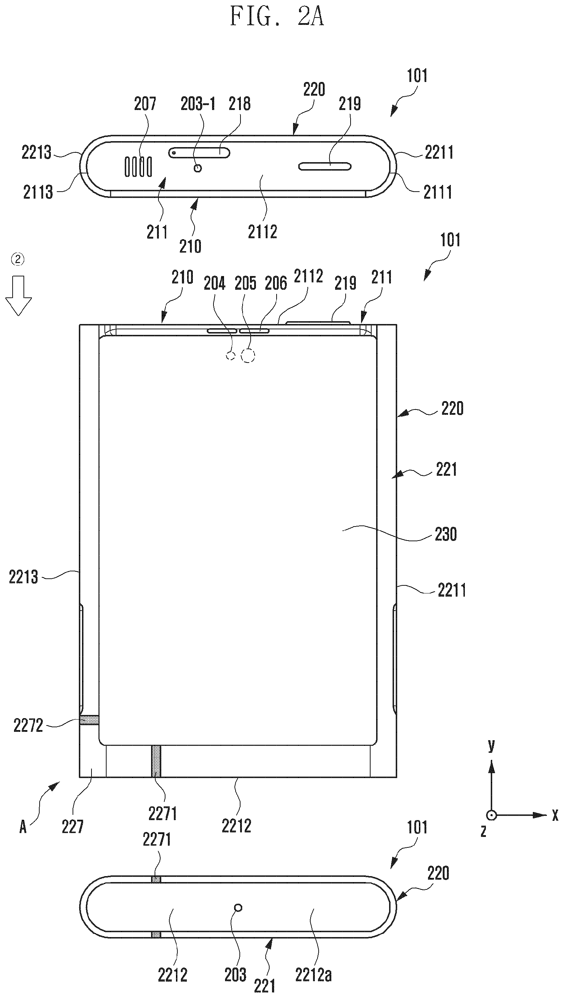

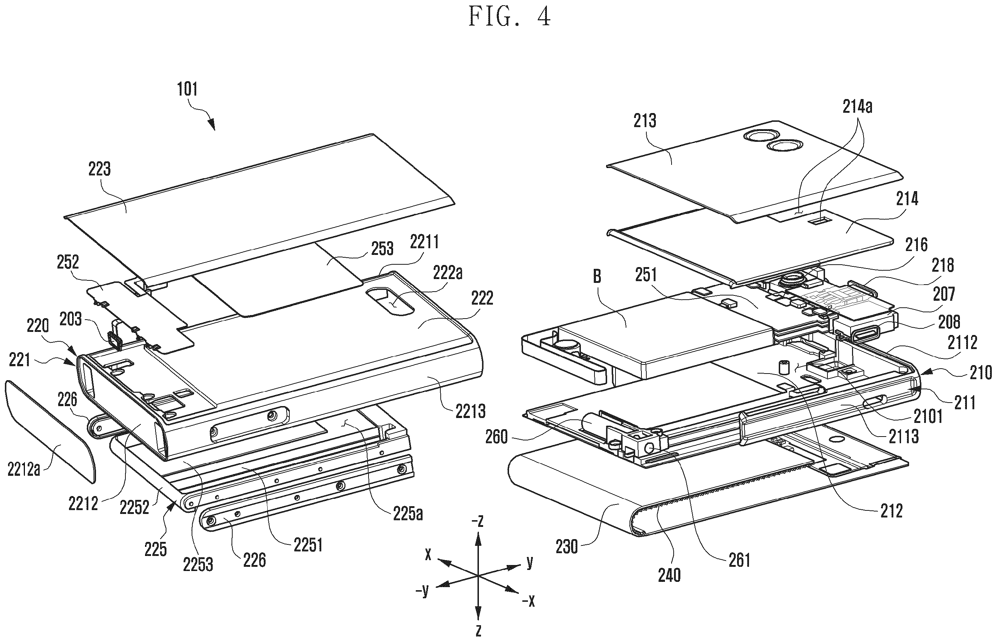

According to various embodiments, the sensor module 176 may include a movement distance detection sensor for detecting a movement distance of a first housing (e.g., a first housing 210 in FIG. 2A) from a second housing (e.g., a second housing 220 in FIG. 2A) of the electronic device 101. According to an embodiment, the sensor module 176 may detect a slide-in state or a slide-out state of the first housing 210 relative to the second housing 220, or a moving state corresponding to a push-pull section, as a triggering operation for sliding. In an embodiment, the processor 120 may detect in real time a movement distance via the sensor module 176 while the first housing 210 (or the second housing 220) is moved from the second housing 220 (or the first housing 210), and also control the display module 160 to display an object corresponding to a changing display area via a display (e.g., a flexible display 230 in FIG. 2A). According to an embodiment, the electronic device 101 may include a drive motor control module 181 for controlling an operation of a drive module (e.g., a drive motor 260 in FIG. 4) disposed in the electronic device 101. For example, in a state where the drive module is not in operation, in a case where a movement distance detected by a movement of the first housing 210 corresponds to a push-pull section (e.g., a designated movement distance or a triggering section), the processor 120 may operate the drive module via the drive motor control module 181 to change to a state where the first housing 210 has been slid in the second housing 220 or has been slid out of the second housing 220. In an embodiment, the drive motor control module 181 may be replaced with the processor 120.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

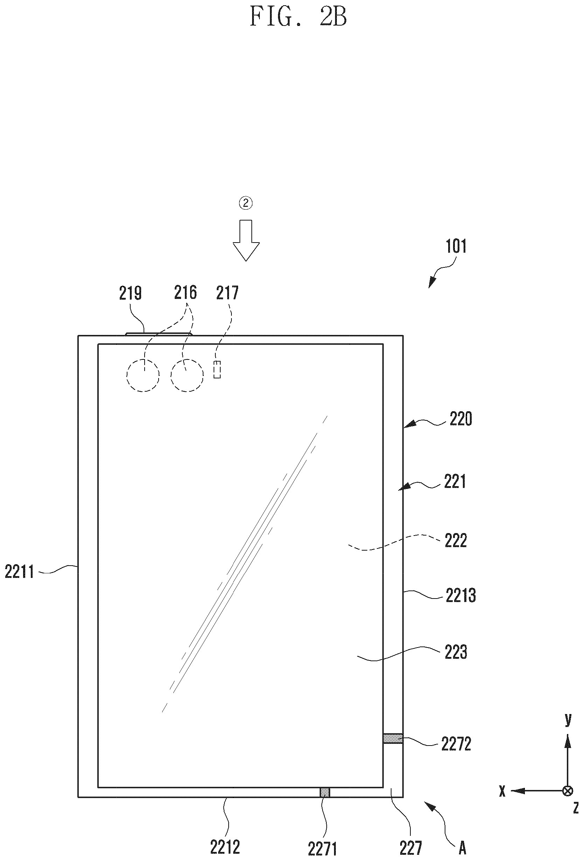

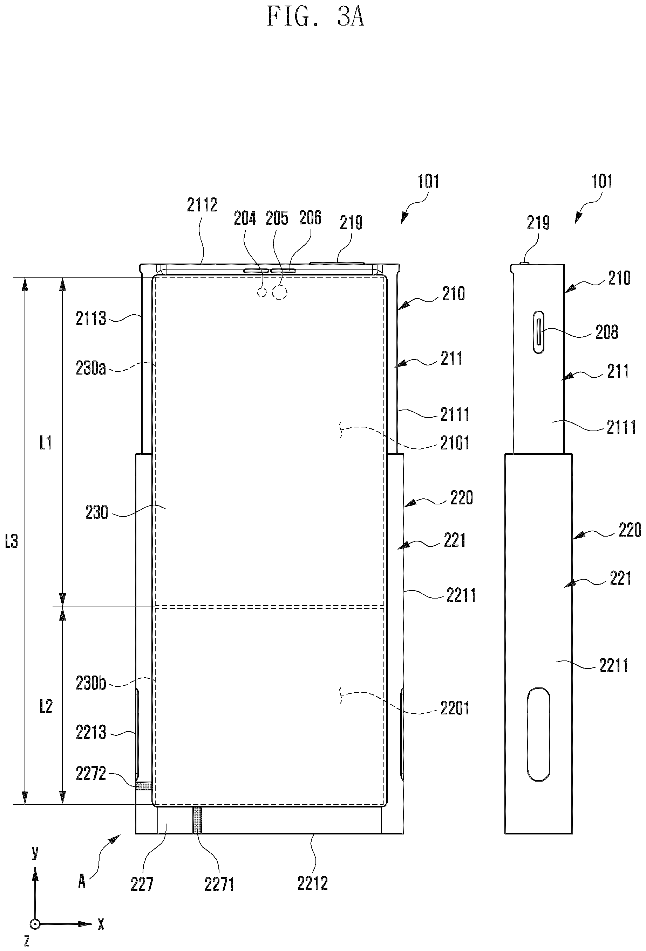

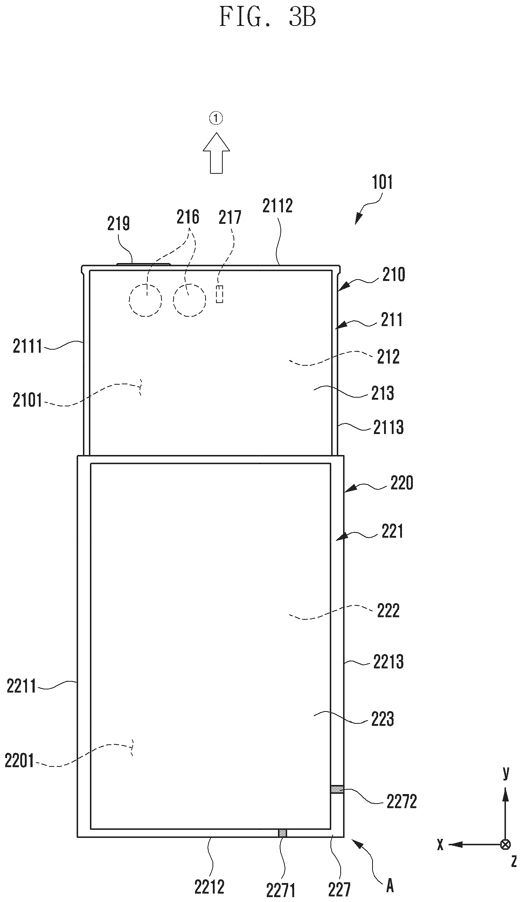

FIG. 2A is a diagram illustrating a front surface of an electronic device in a slide-in state according to various embodiments. FIG. 2B is a diagram illustrating a rear surface of an electronic device in a slide-in state according to various embodiments. FIG. 3A is a diagram illustrating a front surface of an electronic device in a slide-out state according to various embodiments. FIG. 3B is a diagram illustrating a rear surface of an electronic device in a slide-out state according to various embodiments.

Referring to FIG. 2A to FIG. 3B, the electronic device 101 may include the first housing 210 (e.g., a first housing structure, a movable part, first housing part or a slide housing), the second housing 220 (e.g., a second housing structure, a fixed part, second housing part or a base housing) coupled to the first housing 210 to be slidable in a designated direction (e.g., direction ① or direction ②)(e.g. ± y-axis direction), and the flexible display 230 (e.g., an expandable display or a stretchable display) disposed to be supported through at least a part of the first housing 210 and the second housing 220. According to an embodiment, the electronic device 101 may be configured such that the first housing 210 is slid out in a first direction (direction ①) or is slid in along a second direction (direction (2)) opposite to the first direction (direction ①) with respect to the second housing 220 held by a user. According to an embodiment, at least a part of the first housing 210 including a first space 2101 may be accommodated in a second space 2201 of the second housing 220 so as to change to a slide-in state (e.g., retracted position). According to an embodiment, the electronic device 101 may include a bendable member (or a bendable support member) (e.g., a bendable member 240 in FIG. 4) (e.g., a multi-joint hinge module or a multi-bar assembly) that at least partially configures the same plane as at least a part of the first housing 210 in a slide-out state (e.g., extended position), and is at least partially accommodated in the second space 2201 of the second housing 220 in a slide-in state. According to an embodiment, at least a part of the flexible display 230 may be, in a slide-in state, accommodated in the inner space 2201 of the second housing 220 while being supported by the bendable member (e.g., the bendable member 240 in FIG. 4), and thus may be not be seen from the outside. According to an embodiment, at least a part of the flexible display 230 may be, in a slide-out state, disposed to be visible from the outside while being supported by the bendable member (e.g., the bendable member 240 in FIG. 4) at least partially configuring the same plane as the first housing 210.

According to various embodiments, the electronic device 101 may include the first housing 210 including a first lateral member 211, and the second housing 220 including a second lateral member 221. According to an embodiment, the first lateral member 211 may include a first lateral surface 2111 having a first length in a first direction (e.g., y-axis direction), a second lateral surface 2112 extending with a second length shorter than the first length in a direction (e.g., x-axis direction) substantially perpendicular to the first lateral surface 2111, and a third lateral surface 2113 having the first length and extending from the second lateral surface 2112 to be substantially parallel to the first lateral surface 2111. According to an embodiment, the first lateral member 211 may be at least partially made of a conductive material (e.g., metal). In an embodiment, the first lateral member 211 may be made of a combination of a conductive material and a non-conductive material (e.g., polymer). According to an embodiment, the first housing 210 may include a first support member 212 extending from at least a part of the first lateral member 211 to at least a part of the first space 2101. According to an embodiment, the first support member 212 may be integrated with the first lateral member 211. In an embodiment, the first support member 212 may be configured separately from the first lateral member 211 or may be structurally coupled to the first lateral member 211.

According to various embodiments, the second lateral member 221 may include a fourth lateral surface 2211 at least partially corresponding to the first lateral surface 2111 and having a third length, a fifth lateral surface 2212 extending from the fourth lateral surface 2211 in a direction substantially parallel to the second lateral surface 2112 and having a fourth length shorter than the third length, and a sixth lateral surface 2213 having the third length and extending from the fifth lateral surface 2212 to correspond to the third lateral surface 2113. According to an embodiment, the second lateral member 221 may be at least partially made of a conductive material (e.g., metal). In an embodiment, the second lateral member 221 may be made of a combination of a conductive material and a non-conductive material (e.g., polymer). According to an embodiment, at least a part of the second lateral member 221 may include a second support member 222 extending up to at least a part of the second space 2201 of the second housing 220. According to an embodiment, the second support member 222 may be integrated with the second lateral member 221. In an embodiment, the second support member 222 may be configured separately from the second lateral member 221 or may be structurally coupled to the second lateral member 221.

According to various embodiments, the first lateral surface 2111 and the fourth lateral surface 2211 may be coupled to be slidable with respect to each other. According to an embodiment, the third lateral surface 2113 and the sixth lateral surface 2213 may be coupled to be slidable with respect to each other. According to an embodiment, in a slide-in state, the first lateral surface 2111 may overlap with the fourth lateral surface 2211 and may be thus not be substantially seen from the outside. According to an embodiment, in a slide-in state, the third lateral surface 2113 may overlap with the sixth lateral surface 2213 and may be thus not be substantially seen from the outside. In an embodiment, at least a part of the first lateral surface 2111 and the third lateral surface 2113 may be, in a slide-in state, arranged to be at least partially visible from the outside. According to an embodiment, the first support member 212 may, in a slide-in state, overlap with the second support member 222 and thus may not be substantially seen from the outside. In an embodiment, a part of the first support member 212 may, in a slide-in state, overlap with the second support member 222 and thus may not be seen from the outside, and a remaining part of the first support member 212 may be visible from the outside.

According to various embodiments, the electronic device 101 may include a first rear cover 213 disposed at the rear surface thereof and coupled to the first housing 210. According to an embodiment, the first rear cover 213 may be disposed through at least a part of the first support member 212. In an embodiment, the first rear cover 213 may be integrated with the first lateral member 211. According to an embodiment, the first rear cover 213 may be made of polymer, coated or colored glass, ceramic, metal (e.g., aluminum, stainless steel (STS), or magnesium), or a combination of two or more of these materials. In an embodiment, the first rear cover 213 may extend up to at least a part of the first lateral member 211. In an embodiment, at least a part of the first support member 212 may be replaced with the first rear cover 213.

According to various embodiments, the electronic device 101 may include a second rear cover 223 disposed at the rear surface thereof and coupled to the second housing 220. According to an embodiment, the second rear cover 223 may be disposed through at least a part of the second support member 222. In an embodiment, the second rear cover 223 may be integrated with the second lateral member 221. According to an embodiment, the second rear cover 223 may be made of, for example, polymer, coated or colored glass, ceramic, metal (e.g., aluminum, stainless steel (STS), or magnesium), or a combination of two or more of these materials. In an embodiment, the second rear cover 223 may extend up to at least a part of the second lateral member 221. In an embodiment, at least a part of the second support member 222 may be replaced with the second rear cover 223.

According to various embodiments, the electronic device 101 may include the flexible display 230 disposed to be supported by at least a part of the first housing 210 and the second housing 220. According to an embodiment, the flexible display 230 may include a first part 230a (e.g., a planar part or a display region) always seen from the outside, and a second part 230b (e.g., a flexible part) that extends from the first part 230a and is at least partially accommodated in the second space 2201 of the second housing 220 so that at least a part is not seen from the outside in a slide-in state. According to an embodiment, the first part 230a may be disposed to be supported by the first housing 210, and the second part 230b may be disposed to be at least partially supported by the bendable member (e.g., the bendable member 240 in FIG. 4). According to an embodiment, the second part 230b of the flexible display 230 may be disposed to extend from the first part 230a, configure a plane substantially identical to the first part 230a, and be visible from the outside while being supported by the bendable member (e.g., the bendable member 240 in FIG. 4), in a state where the first housing 210 has been slid out in the first direction (direction ①). According to an embodiment, the second part 230b of the flexible display 230 may be disposed to be accommodated in the second space 2201 of the second housing 220 and not to be seen from the outside in a state where the first housing 210 has been slid in along the second direction (direction (2)). Therefore, the electronic device 101 may induce a display area of the flexible display 230 to be changed according to sliding of the first housing 210 from the second housing 220 in a designated direction (e.g., ±y-axis direction).

According to various embodiments, the length of the flexible display 230 may be changed in the first direction (direction ①) (or the second direction (direction (2))) according to sliding of the first housing 210 moved with respect to the second housing 220. For example, the flexible display 230 may have a first display area (e.g., a region corresponding to the first part 230a) corresponding to a first length L1 in a slide-in state. According to an embodiment, the flexible display 230 may, in a slide-out state, be expanded to have a second display area (e.g., a region including the first part 230a and the second part 230b) which corresponds to a third length L3 greater than the first length L1 and is greater than the first display area, according to sliding of the first housing 210 additionally moved by a second length L2 with respect to the second housing 220.

According to various embodiments, the electronic device 101 may include at least one of an input device (e.g., a first microphone 203-1), a sound output device (e.g., a call receiver 206 or a speaker 207), sensor modules 204 and 217, a camera module (e.g., a first camera module 205 or a second camera module 216), a connector port 208, a key input device 219, or an indicator (not illustrated), which are arranged in the first space 2101 of the first housing 210. According to an embodiment, the electronic device 101 may include another input device (e.g., a second microphone 203) disposed in the second housing 220. As another embodiment, the electronic device 101 may be configured to omit at least one of the above elements or additionally include other elements. As another embodiment, at least one of the above elements may be disposed in the second space 2201 of the second housing 220.

According to various embodiments, the input device may include the first microphone 203-1 and the second microphone 203. In an embodiment, the input device (e.g., the first microphone 203-1 and the second microphone 203) may include multiple microphones arranged to be able to sense the direction of sound. The sound output device may include, for example, the call receiver 206 and the speaker 207. According to an embodiment, the speaker 207 may meet the outside through at least one speaker hole disposed on the first housing 210 at a position (e.g., the second lateral surface 2112) always exposed to the outside regardless of a slide-in/slide-out state. According to an embodiment, the connector port 208 may meet the outside through a connector port hole disposed on the first housing 210 in a slide-out state. According to an embodiment, the connector port 208 may also meet the outside through an opening disposed on the second housing 220 to correspond to the connector port hole, in a slide-in state. In an embodiment, the call receiver 206 may include a speaker (e.g., a piezo speaker) that is operated without a separate speaker hole.

According to various embodiments, the sensor modules 204 and 217 may generate an electrical signal or a data value corresponding to an internal operation state or an external environment state of the electronic device 101. The sensor modules 204 and 217 may include, for example, the first sensor module 204 (e.g., a proximity sensor or an illuminance sensor) disposed at the front surface of the electronic device 101, and/or the second sensor module 217 (e.g., a heart rate monitoring (HRM) sensor) disposed at the rear surface of the electronic device 101. According to an embodiment, the first sensor module 204 may be disposed under the flexible display 230 at the front surface of the electronic device 101. According to an embodiment, the first sensor module 204 and/or the second sensor module 217 may include at least one of a proximity sensor, an illuminance sensor, a time-of-flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include the first camera module 205 disposed at the front surface of the electronic device 101, and the second camera module 216 disposed at the rear surface of the electronic device 101. According to an embodiment, the electronic device 101 may include a flash (not illustrated) positioned near the second camera module 216. According to an embodiment, the camera modules 205 and 216 may include one or multiple lenses, an image sensor, and/or an image signal processor. According to an embodiment, the first camera module 205 may be disposed under the flexible display 230, and may be configured to capture an image of a subject through a part of an activation region (e.g., a display region) of the flexible display 230.

According to various embodiments, the first camera module 205 among the camera modules and some sensor modules 204 among the sensor modules 204 and 217 may be arranged to detect an external environment through the flexible display 230. For example, the first camera module 205 and some sensor modules 204 may be arranged to come into contact with an external environment through a perforated opening or a transmission region disposed on the flexible display 230 in the first space 2101 of the first housing 210. According to an embodiment, a region facing the first camera module 205 of the flexible display 230 is a part of a display region displaying contents, and may be configured as a transmission region having a designated transmissivity. According to an embodiment, the transmission region may be configured to have a transmissivity within a range of about 5% to 20%. Such the transmission region may include a region overlapping with a valid region (e.g., an angle-of-view region) of the first camera module 205, through which light captured by an image sensor to generate an image passes. For example, the transmission region of the flexible display 230 may include a region having a pixel arrangement density and/or a wire density lower than the surrounding region. For example, the transmission region may be replaced with the above opening. For example, some camera modules 205 may include an under display camera (UDC). In an embodiment, some sensor modules 204 may be disposed to perform a function thereof without being visually exposed through the flexible display 230 in the inner space of the electronic device 101.

According to various embodiments, the electronic device 101 may include at least one antenna electrically connected to a wireless communication circuit (e.g., the wireless communication module 192 in FIG. 1) disposed on the second housing 220. According to an embodiment, the electronic device 101 may include a bezel antenna A placed through the conductive second lateral member 221 of the second housing 220. For example, the bezel antenna A may include a conductive part 227 disposed in at least a part of the fifth lateral surface 2212 and the sixth lateral surface 2213 of the second lateral member 221, and electrically divided through at least one dividing part 2271 and 2272 made of a non-conductive material (e.g., polymer). According to an embodiment, the wireless communication circuit (e.g., the wireless communication module 192 in FIG. 1) may be configured to transmit or receive a wireless signal through the conductive part 227 in at least one designated frequency band (e.g., about 800 MHz-6000 MHz) (e.g., legacy band). According to an embodiment, the electronic device 101 may include a lateral cover 2212a disposed on the fifth lateral surface 2212 so as to cover at least a part of the at least one dividing part 2271. In an embodiment, the bezel antenna A may be disposed on at least one lateral surface among the second lateral surface 2112, the fourth lateral surface 2211, the fifth lateral surface 2212, and the sixth lateral surface 2213. In an embodiment, the electronic device 101 may further include at least one antenna module (e.g., a 5G antenna module or an antenna structure) disposed in an inner space (e.g., the first space 2101 or the second space 2201) to transmit or receive a wireless signal through another wireless communication circuit (e.g., the wireless communication module 192 in FIG. 1) in frequency band within a range of about 3 GHz-100 GHz.

According to various embodiments, a sliding-in/sliding-out operation of the electronic device 101 may be automatically performed. For example, the sliding-in/sliding-out operation of the electronic device 101 may be performed through a gearing operation between a drive motor (e.g., the drive motor 260 in FIG. 4) including a pinion gear (e.g., a pinion gear 261 in FIG. 4) disposed in the first space 2101 of the first housing 210, and a rack gear (e.g., a rack gear 2251 in FIG. 4) disposed in the second space 2201 of the second housing 220 and gear-coupled to the pinion gear 261. For example, in a case where a triggering operation for changing from a slide-in state to a slide-out state or changing from a slide-out state to a slide-in state is detected, a processor (e.g., the processor 120 in FIG. 1) of the electronic device 101 may operate a drive module (e.g., the drive motor 260 in FIG. 4) disposed in the electronic device 101. According to an embodiment, the triggering operation may include at least one of selection (e.g., a touch) of an object displayed on the flexible display 230, execution of an application program or a function related to triggering, manipulation of a physical button (e.g., a key button) included in the electronic device 101, and reception of a speech input or a wireless signal related to triggering.

The electronic device 101 according to exemplary embodiments of the disclosure may provide an extended sliding distance (stroke) by having a design structure (e.g., a structure in which the drive motor 260 is disposed at a lower end of the first housing 210 in a slide-in state) in which the drive module (e.g., the drive motor 260 in FIG. 4) is disposed at an end part (e.g., the lower end of the first housing 210 in a slide-in state) in a sliding-in direction (direction (2)) in the first space 2101 of the first housing 210, and the pinion gear (e.g., the pinion gear 261 in FIG. 4) of the drive module (e.g., the drive motor 260) is carried and moved by the rack gear (e.g., the rack gear 2251 in FIG. 4) correspondingly disposed in the second space 2201 of the second housing 220. In addition, the electronic device 101 may include electronic components (e.g., a substrate or a battery) arranged in the first space 2101 of the first housing 210 together with the drive module (e.g., the drive motor 260), so as to provide a structure for efficient electrical connection with the drive module (e.g., the drive motor 260). In addition, in a slide-out state, the electronic device may include a support structure disposed in the second space 2201 of the second housing 220 to support at least a part of the flexible display 230, so as to assist in improving operational reliability of the electronic device 101.

FIG. 4 is an exploded perspective view of an electronic device according to various embodiments. Hereinafter, in describing the electronic device 101 in FIG. 4, the same signs are assigned to elements substantially identical to those of the electronic device 101 in FIG. 2A to FIG. 3B, and a detailed description thereof may be omitted.

Referring to FIG. 4, the electronic device 101 may include the first housing 210 including the first space 2101, the second housing 220 slidably coupled to the first housing 210 and including a second space (e.g., the second space 2201 in FIG. 3A), the bendable member 240 at least partially rotatably disposed in the second space 2201, the flexible display 230 disposed to be supported by the first housing 210 and at least a part of the bendable member 240, and the drive module that drives the first housing 210 in a direction (e.g., -y-axis direction) in which the first housing is to be slid into the second housing 220 and/or a direction (e.g., y-axis direction) in which the first housing is to be slide out of the second housing 220. According to an embodiment, the drive module may include the drive motor 260 disposed in the first space 2101 and including the pinion gear 261, and the rack gear 2251 disposed in the second space 2201 to be gear-coupled to the pinion gear 261. According to an embodiment, the drive module may further include a speed reduction module disposed to be coupled to the drive motor 260 to reduce a rotation speed and increase a drive force. According to an embodiment, the drive motor 260 may be disposed in the first space 2101 of the first housing 210, to be supported through at least a part of the first support member 212. According to an embodiment, the drive motor 260 may be fixed to, in the first space 2101, an end part (e.g., edge) of the first support member 212 in a sliding-in direction (e.g., -y-axis direction).

According to various embodiments, the electronic device 101 may include multiple electronic components arranged in the first space 2101. According to an embodiment, the multiple electronic components may include a first substrate 251 (e.g., main substrate), and the camera module 216, a socket module 218 (e.g., SIM tray), the speaker 207, the connector port 208, and a battery B which are arranged around the first substrate 251. According to an embodiment, the multiple electronic components may be arranged around the first substrate 251 together with the drive motor 260 in the first space 2101 of the first housing 210, so as to be efficiently electrically connected.

According to various embodiments, the electronic device 101 may include a rear bracket 214 disposed between the first support member 212 of the first housing 210 and the first rear cover 213 to cover at least a part of the multiple electronic components. According to an embodiment, the rear bracket 214 may be structurally coupled to at least a part of the first support member 212. In an embodiment, the rear bracket 214 may be omitted. According to an embodiment, the rear bracket 214 may be disposed to cover the multiple electronic components and support the first rear cover 213. According to an embodiment, the rear bracket 214 may include a notch region 214a or an opening 214a (e.g., a through hole) disposed in a region corresponding to the camera module 216 and/or a sensor module (e.g., the sensor module 217 in FIG. 3B). According to an embodiment, the camera module 216 and/or the sensor module 217 may be disposed to detect an external environment through the notch region 214a or the opening 214a. According to an embodiment, a region of the first rear cover 213, corresponding to at least the camera module 216 and/or the sensor module 217 may be processed to be transparent. In an embodiment, the camera module 216 and/or the sensor module 217 may also be configured to operate only in a slide-out state of the electronic device 101.

According to various embodiments, the electronic device 101 may include a plate-type support bracket 225 (e.g., a display support bar (DSB)) disposed in the second space 2201 of the second housing 220 and slidably coupled to at least a part of the first support member 212. According to an embodiment, the support bracket 225 may include an opening 225a having a designated size. According to an embodiment, the support bracket 225 may include a support part 2252 disposed at one end thereof and having a curved outer surface to support a rear surface of the bendable member 240 that is bent during a sliding operation. According to an embodiment, the support bracket 225 may include a support plate 2253 extending from at least a part of the support part 2252 to at least a part of the opening 225a so as to support the rear surface of the bendable member 240 in a slide-out state. According to an embodiment, the support bracket 225 may include a rack gear 2251 crossing over the opening 225a and fixed to have a length in a direction parallel to a sliding direction. In an embodiment, the rack gear 2251 may be integrated with the support bracket 225. According to an embodiment, the electronic device 101 may include a pair of guide rails 226 arranged on both lateral surfaces of the support bracket 225 to guide both ends of the bendable member 240 in a sliding direction.

According to various embodiments, the second housing 220 may include an opening 222a (e.g., a through hole) disposed on the second support member 222 in a region corresponding to the camera module 216 and/or the sensor module 217 disposed in the first housing 210, when the electronic device 101 is in a slide-in state. According to an embodiment, the camera module 216 and/or the sensor module 217 may detect an external environment through the opening 222a disposed on the second housing 220, when the electronic device 101 is in a slide-in state. In this case, a region of the second rear cover 223, corresponding to at least the camera module 216 and/or the sensor module 217 may be processed to be transparent.

According to various embodiments, the electronic device 101 may include a second substrate 252 and an antenna member 253 disposed in a space between the second support member 222 of the second housing 220 and the second rear cover 223. According to an embodiment, the second substrate 252 and the antenna member 253 may be electrically connected to the first substrate 251 through at least one electrical connection member (e.g., a flexible printed circuit board (FPCB) or a flexible RF cable (FRC)). In an embodiment, the antenna member 253 may be electrically connected to the second substrate 252, thereby being electrically connected to the first substrate 251 through the second substrate 252.

According to various embodiments, the electronic device 101 may include the flexible display 230 having a length (or display area) changeable in a direction different from a first direction (e.g., y-axis direction) or a second direction (e.g., -y-axis direction). According to an embodiment, the length of the flexible display 230 may be changed in a third direction (e.g., x-axis direction) or a fourth direction (e.g., -x-axis direction) according to sliding of a housing relative to another housing among multiple housings.

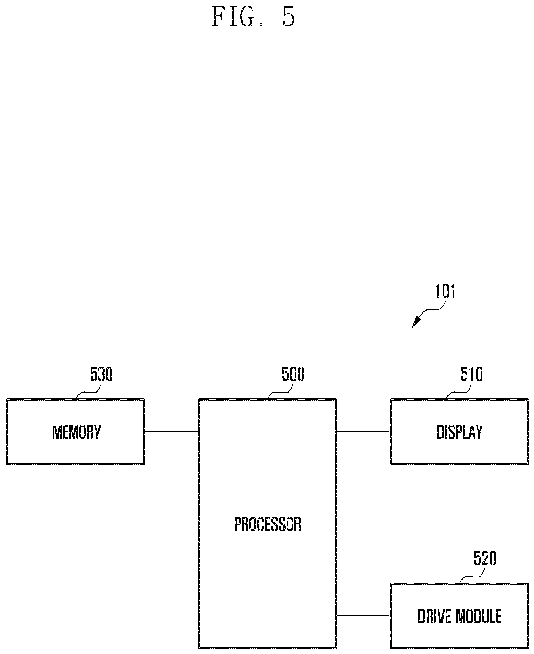

FIG. 5 is a block diagram of an electronic device including a flexible display according to various embodiments.

According to various embodiments referring to FIG. 5, the electronic device 101 may include a processor 500, a display 510, a drive module 520, and/or a memory 530. According to an embodiment, the processor 500 may be substantially identical to the processor 120 in FIG. 1, or may be included in the processor 120. According to an embodiment, the display 510 may be substantially identical to the display module 160 in FIG. 1, or may be included in the display module 160. According to an embodiment, the drive module 520 may include the drive motor control module 181 shown in FIG. 1. According to an embodiment, the memory 530 may be substantially identical to the memory 130 in FIG. 1, or may be included in the memory 130. According to an embodiment, the processor 500 may be operatively, functionally, and/or electrically connected to the display 510, the drive module 520, and/or the memory 530.

According to various embodiments, the display 510 is a flexible display (e.g., the flexible display 230 in FIG. 2A, FIG. 2B, FIG. 3A, FIG. 3B, and FIG. 4), and a display area thereof may be changed (e.g., expanded or reduced). For example, the display area may indicate the size of a display region of the display 510, which is exposed to the outside and displays information. According to an embodiment, the display 510 may be disposed to be supported by at least a part of a first housing (e.g., the first housing 210 in FIG. 2A) and a second housing (e.g., the second housing 220 in FIG. 2A) of the electronic device 101. The display 510 may include a first part (e.g., the first part 230a in FIG. 3A) always seen from the outside, and a second part 230b that extends from the first part 230a and is at least partially accommodated in the second space 2201 of the second housing 220 so that at least a part is not seen from the outside in a slide-in state. For example, the second part 230b of the display 510 may be disposed to be accommodated in the second space 2201 of the second housing 220 and not to be seen from the outside in a state where the first housing 210 has been slid in the second housing 220 in the second direction (direction (2) in FIG. 2A). For example, the display 510 may have a first display area (e.g., a region corresponding to the first part 230a) corresponding to a first length L1 in a state where the first housing 210 has been slid in the second housing 220. For example, the second part 230b of the display 510 may be disposed to extend from the first part 230a and be visible from the outside in a state where the first housing 210 has been slid out of the second housing 220 in the first direction (direction ① in FIG. 3B). For example, the display 510 may have a second display area (e.g., a region including the first part 230a and the second part 230b) corresponding to a third length L3 in a state where the first housing 210 has been slid out of the second housing 220. For example, the third length may include a length greater than the first length. For example, the second display area may include an area greater than the first display area.

According to an embodiment, the display 510 may display information processed in the electronic device 101. For example, the information processed in the electronic device 101 may be displayed through the display region of the display 510. For example, the information processed in the electronic device 101 is at least one object related to an application program executed in the electronic device 101, and may include at least one of a wallpaper (or background screen), an icon, a service screen of the application program, an image, or a widget.

According to various embodiments, the drive module 520 may change a display area of the display 510. For example, changing of the display area may include a state where the size (or length) of the display region of the display 510 is expanded or reduced according to sliding of the first housing 210 from the second housing 220 of the electronic device 101. According to an embodiment, the drive module 520 may control the first housing 210 and/or the second housing 220 so that the first housing 210 is slide into the second housing 220 or the first housing 210 is slide out of the second housing 220. For example, the drive module 520 may include the drive motor 260 shown in FIG. 4.

According to various embodiments, the processor 500 may control the drive module 520 to change the display area of the display 510. According to an embodiment, in a case where a triggering operation for changing the display area of the display 510 is detected, the processor 500 may operate (or drive) the drive module 520 to expand or reduce the display area of the display 510. For example, in a case where the first housing 210 has been slid in the second housing 220, the drive module 520 may operate such that the first housing 210 is slid out of the second housing 220, based on a control of the processor 500. For example, in a case where the first housing 210 has been slid out of the second housing 220, the drive module 520 may operate such that the first housing 210 is slid into the second housing 220, based on a control of the processor 500. For example, the triggering operation may include at least one of selection (e.g., a touch) of an object displayed on the display 510, execution of an application program or a function related to triggering, manipulation of a physical button (e.g., a key button) included in the electronic device 101, and reception of a speech input or a wireless signal related to triggering.

According to various embodiments, the processor 500 may detect a variance of the display area of the display 510. According to an embodiment, the processor 500 may detect a distance by which the first housing 210 has been moved from the second housing 220 to change the display area of the display 510. For example, the distance by which the first housing 210 has been moved may be estimated based on magnetic data (e.g., magnetic strength and/or the number of detected magnetic bodies) detected via at least one magnetic sensor (e.g., Hall IC). For example, the distance by which the first housing 210 has been moved may be estimated based on a driving state (e.g., the rotation count and/or rotation direction of the drive motor 261) of the drive module 520 for moving the first housing 210 (or the second housing 220). For example, the distance by which the first housing 210 has been moved may be estimated based on a capacitance change (e.g., touch information) detected through the second part 230a of the display 510. For example, the variance of the display area of the display 510 may include a distance by which the first housing 210 has been moved from the second housing 220.

According to various embodiments, the processor 500 may detect an angle coefficient corresponding to the variance of the display area of the display 510. For example, the angle coefficient may include information related to the change of an angle between the display 510 and a user's gaze. According to an embodiment, when a triggering operation for changing the display area of the display 510 is detected, the processor 500 may configure a reference angle for detecting an angle coefficient. For example, the reference angle may include an angle between the display 510 and a user at a time point at which a triggering operation for changing the display area of the display 510 is detected. For example, the angle between the display 510 and a user may include an angle between a central region of the display 510 and the user's gaze (or gaze direction) with respect to a horizontal line vertical to the gravity direction. For example, the central region of the display 510 may include a region of interest (ROI) in the display 510 or the center of the display region of the display 510. For example, the user's gaze may be obtained through a camera (not illustrated) (e.g., the first camera module 205 or the second camera module 216) of the electronic device 101.

According to an embodiment, the processor 500 may detect a variance of the angle between the display 510 and the user corresponding to the variance of the display area of the display 510, based on the reference angle. The processor 500 may determine, as an angle coefficient, the variance of the angle between the display 510 and the user. For example, the angle coefficient may be detected based on a distance by which the first housing 210 has been moved to change the display area of the display 510, and an angle conversion ratio. For example, the angle conversion ratio may include a ratio between a movement range of the first housing 210 and an angle range between the user and the display 510. For example, the movement range of the first housing 210 may include a maximum movement distance (e.g., about 54.18 stroke) by which the first housing 210 is movable to change the display area of the display 510. For example, the angle range (e.g., about 45 degrees) between the user and the display 510 may include a maximum angle range within which the user is able to watch the display 510.

According to an embodiment, when a triggering operation for changing the display area of the display 510 is detected, the processor 500 may detect an angle coefficient, based on the variance of the display area of the display 510. For example, the angle coefficient may be detected based on an angle conversion ratio corresponding to a distance by which the first housing 210 has been moved to change the display area of the display 510. For example, information related to the angle conversion ratio corresponding to a movement distance of the first housing 210 may be stored in the memory 530. For example, the angle coefficient may include an angle coefficient having a range of about 1 degree to 90 degrees according to the movement distance of the first housing 210. For example, the range of the angle coefficient may be configured or changed based on an application program being executed in the electronic device 101.

According to an embodiment, the processor 500 may continuously or periodically detect an angle coefficient corresponding to the variance of the display area of the display 510 while the display area of the display 510 is being changed. For example, when the driving module 520 is operating, the processor 500 may determine that the display area of the display 510 is being changed. For example, the processor 500 may detect an angle coefficient corresponding to a linear movement of the first housing 210 and/or the second housing 220 for changing the display area of the display 510.

According to various embodiments, the processor 500 may control the display 510 to change a display method for at least one object displayed on the display 510, based on an angle coefficient corresponding to the variance of the display area of the display 510. According to an embodiment, the processor 500 may control the display 510 such that each of at least one object displayed on the display 510 is rotated, by an angle coefficient, about a rotation axis of the each of at least one object. For example, the at least one object displayed on the display 510 may have a display position in the display 510 that is changed based on the change of the display area of the display 510. For example, the at least one object displayed on the display 510 may have a display position in the display 510 that is fixed (or maintained) regardless of the change of the display area of the display 510. For example, the rotation axis of an object may include one axis (e.g., x axis) selected from among three axes (e.g., x axis, y axis, and z axis) configuring the object, based on a direction (e.g., vertical or horizontal) in which the display area of the display 510 is changed. According to an embodiment, when an angle coefficient exceeds a designated reference angle, the processor 500 may control the display 510 to rotate at least one object displayed on the display 510, based on the angle coefficient. For example, when an angle coefficient is equal to or smaller than a designated angle range, the processor 500 may control the display 510 to maintain a display method for at least one object displayed on the display 510. For example, the designated reference angle may include a reference angle (e.g., about 10 degrees) configured to determine a rotation time point of an object, based on an angle coefficient. For example, in relation to the object displayed on the display 510, at least a part of the object, which has not been displayed through the display 510, may be additionally displayed based on rotation corresponding to an angle coefficient. For example, a rotation amount of the object displayed on the display 510 may be configured based on at least one of a variance of the display area of the display 510 or an angle coefficient.

According to various embodiments, the memory 530 may store various data used by at least one element (e.g., the processor 500, the display 510, and/or the drive module 520) of the electronic device 101. According to an embodiment, the memory 530 may store various instructions executable via the processor 500.

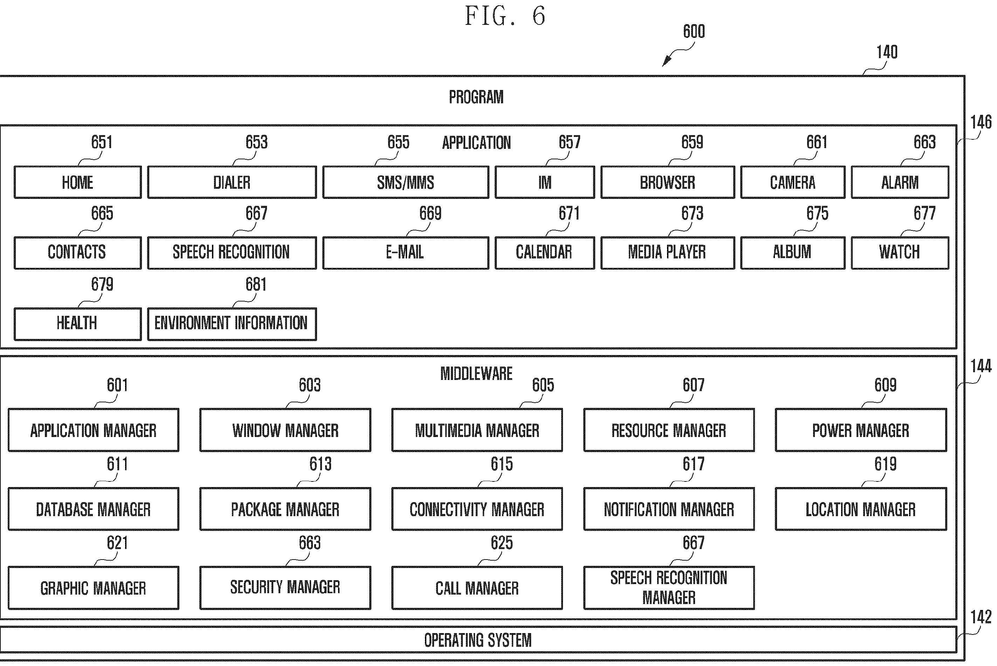

FIG. 6 is a block diagram 600 illustrating an example of the program 140 according to various embodiments. According to an embodiment, the program 140 may include an operating system (OS) 142 to control one or more resources of the electronic device 101, middleware 144, or an application 146 executable in the OS 142. The OS 142 may include, for example, Android^{™}, iOS^{™}, Windows^{™}, Symbian^{™}, Tizen^{™}, or Bada^{™}. At least part of the program 140, for example, may be pre-loaded on the electronic device 101 during manufacture, or may be downloaded from or updated by an external electronic device (e.g., the electronic device 102 or 104, or the server 108) during use by a user.

The operating system 142 may control management (e.g., allocation or deallocation) of at least one system resource (e.g., a process, a memory, or a power source) of the electronic device 101. The operating system 142 may additionally or alternatively include at least one driver program for operating another hardware device of the electronic device 101, for example, the input module 150, the sound output module 155, the display module 160, the audio module 170, a sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 601, a window manager 603, a multimedia manager 605, a resource manager 607, a power manager 609, a database manager 611, a package manager 613, a connectivity manager 615, a notification manager 617, a location manager 619, a graphic manager 621, a security manager 623, a telephony manager 625, or a voice recognition manager 627.

The application manager 601, for example, may manage the life cycle of the application 146. The window manager 603, for example, may manage one or more graphical user interface (GUI) resources that are used on a screen. The multimedia manager 605, for example, may identify one or more formats to be used to play media files, and may encode or decode a corresponding one of the media files using a codec appropriate for a corresponding format selected from the one or more formats. The resource manager 607, for example, may manage the source code of the application 146 or a memory space of the memory 130.The power manager 609, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 609 may interwork with a basic input/output system (BIOS) (not shown) of the electronic device 101.

According to an embodiment, a database manager 611 may generate, search, or change a database to be used by the application 146. The package manager 613, for example, may manage installation or update of an application that is distributed in the form of a package file. The connectivity manager 615, for example, may manage a wireless connection or a direct connection between the electronic device 101 and the external electronic device. The notification manager 617, for example, may provide a function to notify a user of an occurrence of a specified event (e.g., an incoming call, message, or alert). The location manager 619, for example, may manage locational information on the electronic device 101. The graphic manager 621, for example, may manage one or more graphic effects to be offered to a user or a user interface related to the one or more graphic effects.

The security manager 623, for example, may provide system security or user authentication. The telephony manager 625, for example, may manage a voice call function or a video call function provided by the electronic device 101. The voice recognition manager 627, for example, may transmit a user's voice data to the server 108, and receive, from the server 108, a command corresponding to a function to be executed on the electronic device 101 based at least in part on the voice data, or text data converted based at least in part on the voice data.

According to an embodiment, the middleware 644 may dynamically delete some existing components or add new components. According to an embodiment, at least part of the middleware 144 may be included as part of the OS 142 or may be implemented as another software separate from the OS 142.

According to an embodiment, when the change of the display area of the display 510 of the electronic device 101 is detected, the middleware 144 (e.g., a window manager 603 and/or graphic manager 621) may configure (or reconfigure) a screen (e.g., frame) to correspond to the changed display area of the display 510. For example, the middleware 144 may configure (or reconfigure) a screen (e.g., frame) to correspond to the changed display area of the display 510 through rendering related to an application program.

According to various embodiments, the application 146 may include an application related to home 651, dialer 653, SMS/MMS 655, instant message (IM) 657, browser 659, camera 661, alarm 663, contacts 665, speech recognition 667, e-mail 669, calendar 671, media player 673, album 675, watch 677, health 679 (e.g., measuring biometric information such as exercise quantity or blood sugar), or environment information 681 (e.g., measuring of atmospheric pressure, humidity, or temperature information). According to an embodiment, the application 146 may further include an information exchange application (not illustrated) capable of supporting information exchange between the electronic device 101 and an external electronic device. For example, the information exchange application may include a notification relay application configured to transfer designated information (e.g., a call, a message, or an alarm) to an external electronic device, or a device management application configured to manage an external electronic device. For example, the notification relay application may transfer, to an external electronic device, notification information corresponding to a designated event (e.g., mail reception) that has occurred in another application (e.g., the email application 669) of the electronic device 101. Additionally or alternatively, the notification relay application may receive notification information from an external electronic device, and provide the notification information to a user of the electronic device 101. For example, the device management application may control power (e.g., turning-on or turning-off) or a function (e.g., brightness, resolution, or focus) of an external electronic device communicating with the electronic device 101 or some elements thereof (e.g., a display module or a camera module of the external electronic device). The device management application may additionally or alternatively support installation, removal, or update of an application operating in an external electronic device.

According to various embodiments, an electronic device (e.g., the electronic device 101 in FIG. 1, FIG. 2A, FIG. 2B, FIG. 3A, FIG. 3B, FIG. 4, or FIG. 5) may include a first housing (e.g., the first housing 210 in FIG. 2A, FIG. 2B, FIG. 3A, FIG. 3B, or FIG. 4), a second housing (e.g., the second housing 220 in FIG. 2A, FIG. 2B, FIG. 3A, FIG. 3B, or FIG. 4) slidably coupled to the first housing, a flexible display (e.g., the display module 160 in FIG. 1, the flexible display 230 in FIG. 2A, FIG. 2B, FIG. 3A, FIG. 3B, or FIG. 4, or the display 510 in FIG. 5) which is disposed to be supported by the first housing and the second housing, and a display area of which is expanded during transition to a slide-out state from a slide-in state where at least a part of the first housing is accommodated in a space of the second housing, and at least one processor (e.g., the processor 120 in FIG. 1 or the processor 500 in FIG. 5) operatively connected to the flexible display, wherein the at least one processor is configured to display at least one object on the flexible display, in case that a change of the display area of the flexible display is detected, detect an angle coefficient corresponding to a variance of the display area of the flexible display, and change a display method for the at least one object displayed on the flexible display, based on the angle coefficient.

According to various embodiments, the at least one processor may be configured to, in case that a change of the display area of the flexible display is detected, configure a reference angle, and detect an angle coefficient corresponding to a variance of the display area of the flexible display, based on the reference angle.

According to various embodiments, the at least one processor may be configured to configure, as the reference angle, an angle corresponding to a user's gaze direction against the flexible display at a time point at which the change of the display area of the flexible display is started.

According to various embodiments, the at least one object may include at least one of a wallpaper (or a background screen), an icon, a service screen of an application program, an image, or a widget.

According to various embodiments, the electronic device may further include a drive module (e.g., the drive motor control module 181 in FIG. 1, the drive motor 260 in FIG. 2A, FIG. 2B, FIG. 3A, FIG. 3B, or FIG. 4, or the drive module 520 in FIG. 5) configured to slide the first housing with respect to the second housing.

According to various embodiments, the at least one processor may be configured to operate the drive module to change the display area of the flexible display.

According to various embodiments, the at least one processor may be configured to rotate the at least one object displayed on the flexible display about an axis among multiple axes related to the at least one object so that the at least one object corresponds to the angle coefficient.

According to various embodiments, the at least one processor may be configured to configure an axis serving as a reference for rotating an object, based on at least one of a direction in which the at least a part of the first housing is slid into the space of the second housing, or a direction in which the at least a part is slid out of the space.

According to various embodiments, the at least one processor may be configured to display an image corresponding to the angle coefficient among multiple images configuring the at least one object displayed on the flexible display.

According to various embodiments, the at least one processor may be configured to detect the variance of the display area of the flexible display, based on a distance by which the first housing has been moved from the second housing.

According to various embodiments, the at least one processor may be configured to, in case that a change of the display area of the flexible display is not detected for a designated time, restore the display method for the at least one object displayed on the flexible display.

According to various embodiments, an electronic device (e.g., the electronic device 101 in FIG. 1, FIG. 2A, FIG. 2B, FIG. 3A, FIG. 3B, FIG. 4, or FIG. 5) may include a first housing (e.g., the first housing 210 in FIG. 2A, FIG. 2B, FIG. 3A, FIG. 3B, or FIG. 4), a second housing (e.g., the second housing 220 in FIG. 2A, FIG. 2B, FIG. 3A, FIG. 3B, or FIG. 4) slidably coupled to the first housing, a flexible display (e.g., the display module 160 in FIG. 1, the flexible display 230 in FIG. 2A, FIG. 2B, FIG. 3A, FIG. 3B, or FIG. 4, or the display 510 in FIG. 5) which is disposed to be supported by the first housing and the second housing, and a display area of which is expanded during transition to a slide-out state from a slide-in state where at least a part of the first housing is accommodated in a space of the second housing, and at least one processor (e.g., the processor 120 in FIG. 1 or the processor 510 in FIG. 5) operatively connected to the flexible display, wherein the at least one processor is configured to display at least one object on the flexible display, in case that a change of the display area of the flexible display is detected, identify whether a display method for the at least one object is changeable, and in case that it is determined that the display method for the at least one object is changeable, change the display method for the at least one object, based on a variance of the display area of the flexible display.

According to various embodiments, the at least one processor may be configured to identify an object, a display method for which is changeable, among the at least one object displayed on the flexible display, and change the display method for the identified object, based on the variance of the display area of the flexible display.

According to various embodiments, the electronic device may further include a drive module configured to slide the first housing with respect to the second housing, wherein the at least one processor is configured to operate the drive module to change the display area of the flexible display.

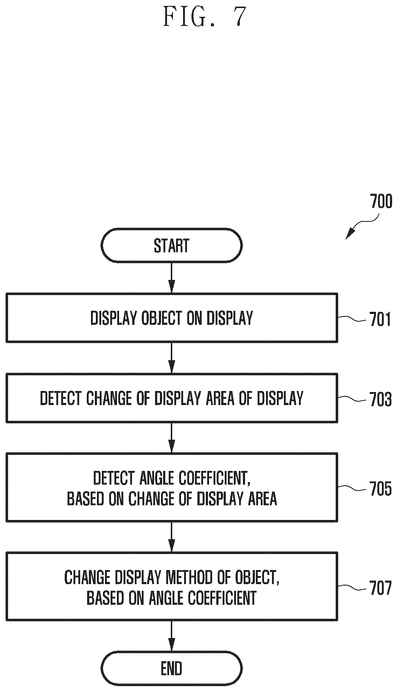

FIG. 7 is a flowchart 700 for controlling a display method for an object, based on the change of a display area of a flexible display in an electronic device according to various embodiments. In the embodiment below, operations may be sequentially performed, but sequential performance is not necessarily required. For example, the sequence of operations may be changed, and at least two operations may be performed in parallel. For example, an electronic device in FIG. 7 may be the electronic device 101 in FIG. 1, FIG. 2A, FIG. 2B, FIG. 3A, FIG. 3B, FIG. 4, or FIG. 5.

According to various embodiments referring to FIG. 7, the electronic device 101 or a processor (e.g., the processor 120 in FIG. 1 or the processor 500 in FIG. 5) may, in operation 701, display at least one object in a display region of the display 510. For example, the object is information related to an application program executed in the electronic device 101, and may include at least one of a wallpaper (or background screen), an icon, a service screen of the application program, an image, or a widget. For example, the display 510 is a flexible display and a display area thereof may be changed (e.g., expanded or reduced).

According to various embodiments, the electronic device 101 or the processor (e.g., the processor 120 or 500) may, in operation 703, detect a variance of the display area of the display 510. According to an embodiment, when a triggering operation for changing the display area of the display 510 is detected, the processor 500 may operate the drive module 520 to change (e.g., enlarge or reduce) the display area of the display 510. The change of the display area of the display 510 may be generated by a movement of, by the drive module 520, the first housing 210 among the first housing 210 and the second housing 220 supporting the display 510. For example, the triggering operation may include at least one of selection (e.g., a touch) of an object displayed on the display 510, execution of an application program or a function related to triggering, manipulation of a physical button (e.g., a key button) included in the electronic device 101, and reception of a speech input or a wireless signal related to triggering. According to an embodiment, the processor 500 may detect a distance (e.g., the variance of the display area) by which the first housing 210 has been moved from the second housing 220 to change the display area of the display 510. For example, the distance (e.g., the variance of the display area) by which the first housing 210 has been moved may be estimated based on magnetic data (e.g., magnetic strength and/or the number of detected magnetic bodies) detected via at least one magnetic sensor (e.g., Hall IC). For example, the distance (e.g., the variance of the display area) by which the first housing 210 has been moved may be estimated based on a driving state (e.g., the rotation count and/or rotation direction of the drive motor 261) of the drive module 520 for moving the first housing 210. For example, the distance (e.g., the variance of the display area) by which the first housing 210 has been moved may be estimated based on a capacitance change (e.g., touch information) detected through the second part 230a of the display 510.

According to various embodiments, the electronic device 101 or the processor (e.g., the processor 120 or 500) may, in operation 705, detect an angle coefficient corresponding to the variance of the display area of the display 510. According to an embodiment, the processor 500 may configure, as a reference angle, an angle between the display 510 and a user at a time point at which a triggering operation for changing the display area of the display 510 is detected. The processor 500 may detect a variance of the angle between the display 510 and the user corresponding to the variance of the display area of the display 510, based on the reference angle. The processor 500 may determine, as the angle coefficient, the variance of the angle between the display 510 and the user. For example, the angle coefficient may be detected based on a movement distance of the first housing 210 for changing the display area of the display 510, and an angle conversion ratio. For example, the angle conversion ratio may include a ratio between a movement range of the first housing 210 and an angle range between the user and the display 510. For example, the movement range of the first housing 210 may include a maximum movement distance (e.g., about 54.18 stroke) by which the first housing 210 is movable to change the display area of the display 510. For example, the angle range (e.g., about 45 degrees) between the user and the display 510 may include a maximum angle range within which the user is able to watch the display 510.

According to various embodiments, the electronic device 101 or the processor (e.g., the processor 120 or 500) may, in operation 707, change a display method for the at least one object displayed on the display 510, based on the angle coefficient corresponding to the variance of the display area of the display 510. According to an embodiment, the processor 500 may control the display 510 such that each object displayed on the display 510 is rotated about a rotation axis of the object to correspond to the angle coefficient. For example, the object displayed on the display 510 may have a display position in the display 510 that is changed based on the change of the display area of the display 510, or a display position in the display 510 that is fixed (or maintained) regardless of the change of the display area of the display 510. For example, the rotation axis of an object may include one axis (e.g., x axis) selected from among three axes (e.g., x axis, y axis, and z axis) configuring the object, based on a direction in which the display area of the display 510 is changed.

According to various embodiments, when the first housing 210 is slid out of the second housing 220 in a state where the first housing has been slid in the second housing 220 (e.g., expansion of the display area), the electronic device 101 may change a display method for at least one object displayed on the display 510, based on a variance (or angle coefficient) of the display area of the display 510. According to various embodiments, when the first housing 210 is slid into the second housing 220 in a state where the first housing has been slid out of the second housing 220 (e.g., reduction of the display area), the electronic device 101 may change a display method for at least one object displayed on the display 510, based on a variance (or angle coefficient) of the display area of the display 510. For example, the changing of the display method may include a series of operations of rotating the object displayed on the display 510, to correspond to a designated rotation amount, based on the variance (or angle coefficient) of the display area of the display 510.

According to various embodiments, the electronic device 101 (or the processor 120 or 500) may continuously or periodically detect an angle coefficient corresponding to the variance of the display area of the display 510 while the display area of the display 510 is being changed. The electronic device 101 (or the processor 120 or 500) may continuously or periodically change a display method for at least one object displayed on the display 510, based on the angle coefficient while the display area of the display 510 is being changed.

According to various embodiments, when the change of the display area of the display 510 is completed, the electronic device 101 (or the processor 120 or 500) may restore a display method for at least one object displayed on the display 510. According to an embodiment, when a change from a slide-in state to a slide-out state is completed, the processor 500 may restore a display method (e.g., rotation) of an object, to which a change has been made based on the change of the display area of the display 510, to a display method before the change. According to an embodiment, when a change from a slide-out state to a slide-in state is completed, the processor 500 may restore a display method (e.g., rotation) of an object, to which a change has been made based on the change of the display area of the display 510, to a display method before the change.

According to various embodiments, when there is no change of the display area of the display 510 during a designated time, the electronic device 101 (or the processor 120 or 500) may restore a display method for at least one object displayed on the display 510. According to an embodiment, the processor 500 may identify whether a change of the display area of the display 510 occurs during a designated time in a state where a display method for an object has been changed based on a change of the display area of the display 510. When a change of the display area of the display 510 does not continuously occur during a designated time, the processor 500 may restore a display method (e.g., rotation) of an object, to which a change has been made based on a change of the display area of the display 510, to a display method before the change.

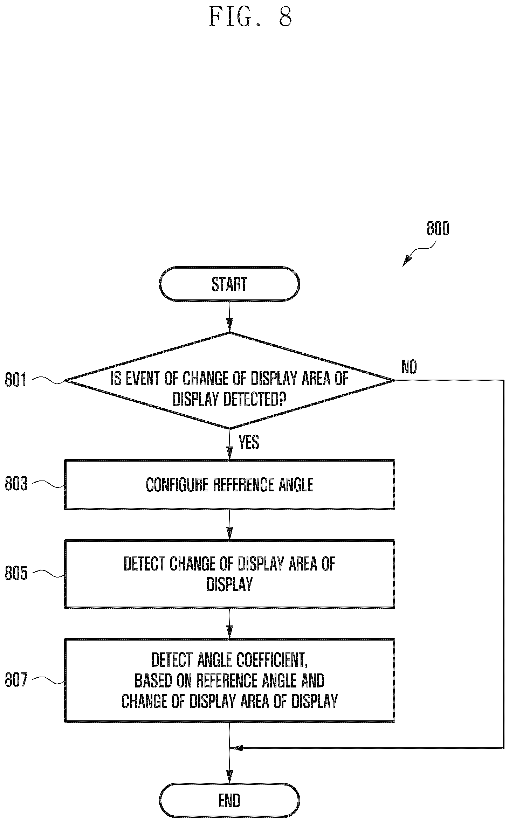

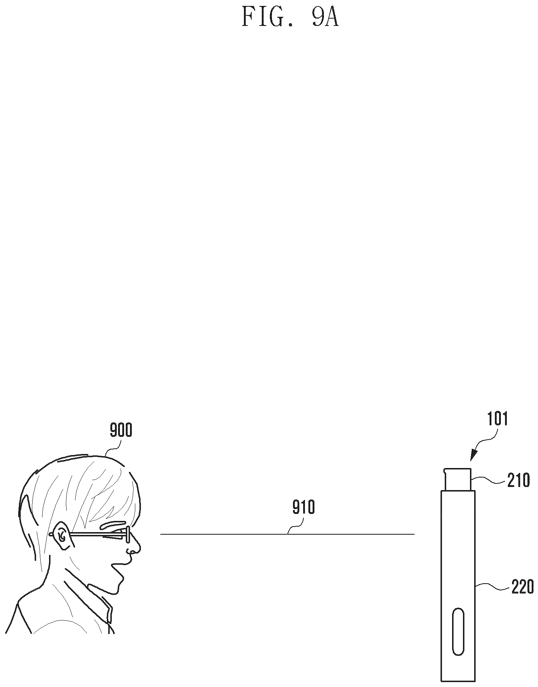

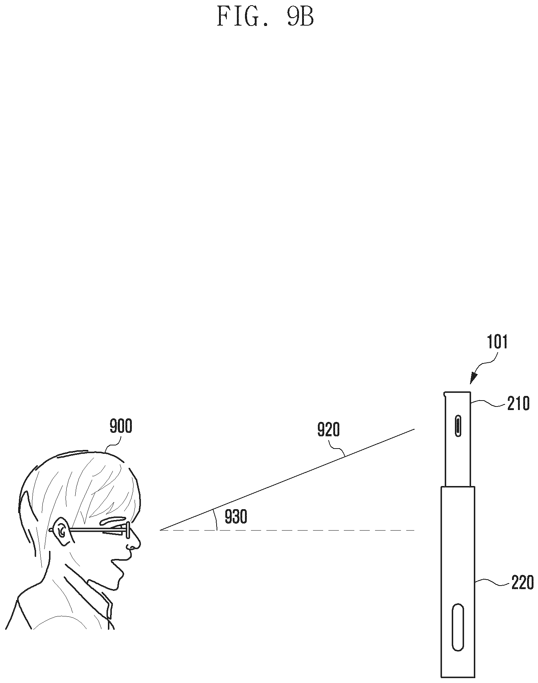

FIG. 8 is a flowchart 800 for detecting an angle coefficient in an electronic device according to various embodiments. According to an embodiment, at least some operations in FIG. 8 may include detailed operations of operation 703 and operation 705 in FIG. 7. In the embodiment below, operations may be sequentially performed, but sequential performance is not necessarily required. For example, the sequence of operations may be changed, and at least two operations may be performed in parallel. For example, an electronic device in FIG. 8 may be the electronic device 101 in FIG. 1, FIG. 2A, FIG. 2B, FIG. 3A, FIG. 3B, FIG. 4, or FIG. 5. For example, FIG. 8 may be described with reference to FIG. 9A and FIG. 9B. FIG. 9A shows an example of configuring a reference angle in an electronic device according to various embodiments. FIG. 9B shows an example of detecting an angle coefficient corresponding to the change of a display area of a flexible display in an electronic device according to various embodiments.

According to various embodiments referring to FIG. 8, the electronic device 101 or a processor (e.g., the processor 120 in FIG. 1 or the processor 500 in FIG. 5) may, in operation 801, identify whether an event of a change of a display region of the display 510 is detected. According to an embodiment, when a triggering operation for changing a display area of the display 510 is detected, the processor 500 may determine that an event of a change of the display region of the display 510 is detected.

According to various embodiments, when an event of a change of the display region of the display 510 has not been detected (e.g., "NO" in operation 801), the electronic device 101 or the processor (e.g., the processor 120 or 500) may terminate an embodiment for detecting an angle coefficient.

According to various embodiments, when an event of a change of the display region of the display 510 is detected (e.g., "YES" in operation 801), the electronic device 101 or the processor (e.g., the processor 120 or 500) may, in operation 803, configure a reference angle for detecting an angle coefficient. According to an embodiment, in a case of a slide-in state as illustrated in FIG. 9A, the processor 500 may configure, as a reference angle, an angle 910 between the display 510 and a user 900 at a time point at which a triggering operation for changing the display area of the display 510 is detected.

According to various embodiments, the electronic device 101 or the processor (e.g., the processor 120 or 500) may, in operation 805, detect a variance of the display area of the display 510. According to an embodiment, when a triggering operation for changing the display area of the display 510 is detected, the processor 500 may operate the drive module 520 to change (e.g., enlarge or reduce) the display area of the display 510. According to an embodiment, in a case where the first housing 210 has been slid in the second housing 220, the drive module 520 may operate such that the first housing 210 is slid out of the second housing 220, based on a control of the processor 500. In this case, the display area of the display 510 may be expanded based on a distance by which the first housing 510 has been moved. According to an embodiment, in a case where the first housing 210 has been slid out of the second housing 220, the drive module 520 may operate such that the first housing 210 is slid into the second housing 220, based on a control of the processor 500. In this case, the display area of the display 510 may be reduced based on a distance by which the first housing 510 has been moved.

According to various embodiments, the electronic device 101 or the processor (e.g., the processor 120 or 500) may, in operation 807, detect an angle coefficient corresponding to the reference angle and the variance of the display area of the display 510. According to an embodiment, as illustrated in FIG. 9B, a gaze direction 920 of the user 900 against the display 510 may be changed based on a change (e.g., expansion) of the display area of the display 510. The processor 500 may determine, as an angle coefficient, a variance 930 of the angle caused by the changed gaze direction 920 of the user 900 corresponding to the variance of the display area of the display 510, based on the reference angle 910.

According to various embodiments, when an event of a change of the display region of the display 510 is detected (e.g., "YES" in operation 801 in FIG. 8), the electronic device 101 (or the processor 120 or 500) may detect an angle coefficient, based on a variance of the display area of the display 510. According to an embodiment, the electronic device 101 may omit operation 803 of FIG. 8.

According to various embodiments, as illustrated in FIG. 9B, when an event of a change of the display region of the display 510 is detected in a state where the first housing 210 has been slid out of the second housing 220 (e.g., "YES" in operation 801), the electronic device 101 (or the processor 120 or 500) may configure, as a reference angle, the angle 920 between the display 510 and the user 900 at a time point at which a triggering operation for changing the display area of the display 510 is detected. According to an embodiment, as illustrated in FIG. 9A, when the first housing 210 is changed to a state of having been slid in the second housing 220, the electronic device 101 may determine, as an angle coefficient, the variance 930 of the angle caused by the changed gaze direction 910 of the user 900 corresponding to the variance (e.g., a reduced amount) of the display area of the display 510, based on the reference angle 920.

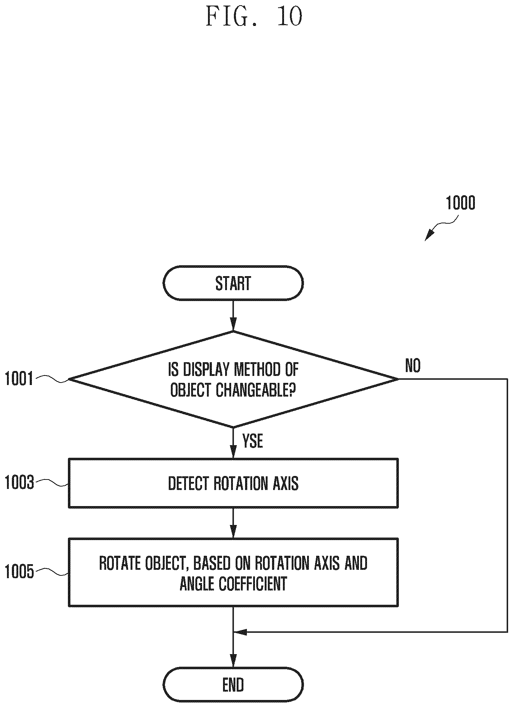

FIG. 10 is a flowchart 1000 for changing a displaying method for an object, based on an angle coefficient in an electronic device according to various embodiments. According to an embodiment, at least some operations in FIG. 10 may include a detailed operation of operation 707 in FIG. 7. In the embodiment below, operations may be sequentially performed, but sequential performance is not necessarily required. For example, the sequence of operations may be changed, and at least two operations may be performed in parallel. For example, an electronic device in FIG. 10 may be the electronic device 101 in FIG. 1, FIG. 2A, FIG. 2B, FIG. 3A, FIG. 3B, FIG. 4, or FIG. 5.

According to various embodiments referring to FIG. 10, when an angle coefficient corresponding to a variance of a display area of the display 510 is detected (e.g., operation 705 in FIG. 7), the electronic device 101 or a processor (e.g., the processor 120 in FIG. 1 or the processor 500 in FIG. 5) may, in operation 1001, identify whether a display method for at least one object displayed on the display 510 is changeable. According to an embodiment, when a menu related to application of an effect corresponding to a change of the display area of the display 510 is configured to be in an active state (e.g., "ON"), the processor 500 may determine that a display method for at least one object displayed on the display 510 is changeable. According to an embodiment, when a menu related to application of an effect corresponding to a change of the display area of the display 510 is configured to be in an inactive state (e.g., "OFF"), the processor 500 may determine that the change of a display method for at least one object displayed on the display 510 is limited. According to an embodiment, the processor 500 may determine whether a display method for an object is changeable, based on an attribute of each of at least one object displayed in the display region of the display 510.

According to various embodiments, when it is determined that a display method for at least one object displayed on the display 510 is unchangeable (e.g., "NO" in operation 1001), the electronic device 101 or the processor (e.g., the processor 120 or 500) may terminate an embodiment for changing the display method for the object.

According to various embodiments, when it is determined that a display method for at least one object displayed on the display 510 is changeable (e.g., "YES" in operation 1001), the electronic device 101 or the processor (e.g., the processor 120 or 500) may, in operation 1003, detect a rotation axis corresponding to each object. For example, the rotation axis of an object may include one axis (e.g., x axis) selected from among three axes (e.g., x axis, y axis, and z axis) configuring the object, based on a direction in which the display area of the display 510 is changed. For example, the rotation axis of an object may be configured to be a first axis (e.g., x axis) when the display area of the display 510 is changed in a first direction (e.g., y-axis direction) (or a second direction (e.g., -y-axis direction).

According to various embodiments, the electronic device 101 or the processor (e.g., the processor 120 or 500) may, in operation 1005, rotate each object about the rotation axis thereof to correspond to an angle coefficient. According to an embodiment, the display 510 may additionally display at least a part of an object, which has not been displayed on the display 510, based on rotation of the object. For example, the rotation of an object may include a series of operations of rotating a three-dimensional object about a rotation axis to correspond to an angle coefficient. For example, the rotation of an object may include a series of operations of detecting and displaying at least one image corresponding to an angle coefficient among various images corresponding to different angles related to a particular object.

According to various embodiments, when a direction in which the display area of the display 510 is changeable is fixed to the first direction (e.g., y-axis direction) (or the second direction (e.g., -y-axis direction), the electronic device 101 may fix the rotation axis of an object to the first axis (e.g., x axis). In this case, operation 1003 of FIG. 10 may be omitted.

According to various embodiments, the electronic device 101 may identify whether there is an object, the display method for which is changeable, among at least one object displayed on the display 510. When it is determined that there is an object, the display method for which is changeable, the electronic device 101 may change the display method for the object, the display method for which is changeable, based on the variance of the display area of the display 510.

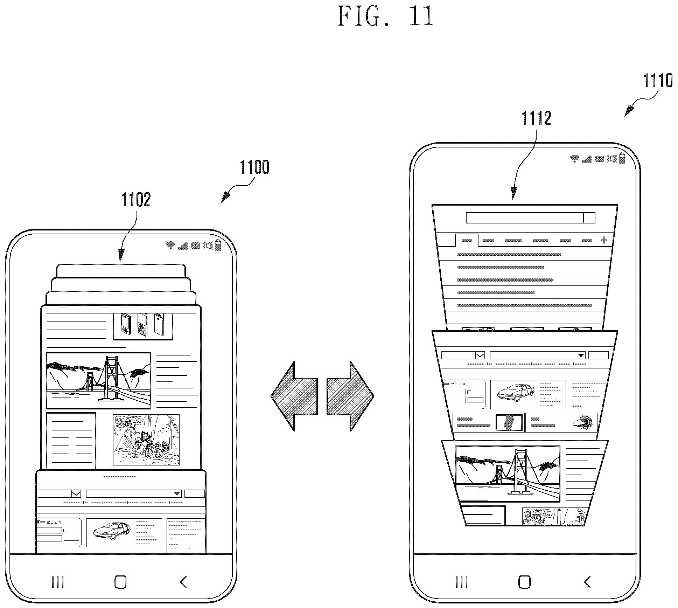

FIG. 11 shows an example of changing a display method for an item list in an electronic device according to various embodiments.

According to various embodiments referring to FIG. 11, the electronic device 101 may display an item list 1102 in a display region of the display 510 in a slide-in state 1100. According to an embodiment, the display 510 may display information (e.g., service screen) related to an Internet application program when the Internet application program is executed in the electronic device 101. For example, the information related to the Internet application program may include multiple window screens 1102 having been used by a user through the Internet application program. For example, the multiple window screens 1102 may be displayed to at least a partially overlap with each other. For example, a window screen may include a screen related to a particular Internet address. For example, the slide-in state 1100 may include a state where the first housing 210 of the electronic device 101 is accommodated in the second space 2201 of the second housing 220. According to an embodiment, when the electronic device 101 is in the slide-in state 1100, at least a part (e.g., the second part 230b in FIG. 3A) of the display 510 may be accommodated in the second space 2201 of the second housing 220 and thus not be exposed to an external environment. For example, when the electronic device 101 is in the slide-in state 1100, at least a part (e.g., the second part 230b in FIG. 3A) of the display 510 may be deactivated or displayed by using a black screen. For example, at least a part of the display 510 may include a region remaining after excluding a display region of the display 510, in which the item list 1102 is displayed on the display 510.

According to various embodiments, when the electronic device 101 is changed to a slide-out state 1110, the electronic device may continuously or periodically detect a variance of a display area of the display 510. The electronic device 101 may reflect an angle coefficient corresponding to the variance of the display area of the display 510 to change a display method for the information displayed on the display 510 and related to the Internet application program. According to an embodiment, the processor 500 may rotate the multiple window screens 1102 displayed on the display 510 and related to the Internet application program, to correspond to an angle coefficient detected by the variance of the display area of the display 510 (as indicated by reference numeral 1112). For example, the multiple window screens 1102 may be rotated about a first axis (e.g., x axis) to correspond to the angle coefficient (as indicated by reference numeral 1112). The display 510 may additionally display at least a part of the multiple window screens 1102, which has not been displayed on the display 510, based on the rotation of the multiple window screens 1102. For example, the slide-out state 1110 may include a state where the first housing 210 of the electronic device 101 is slid out of the second space 2201 of the second housing 220.

According to various embodiments, while the display area of the display 510 is being changed, the electronic device 101 may continuously or periodically reflect an angle coefficient corresponding to the variance of the display area of the display 510 to change a display method for the information displayed on the display 510 and related to the Internet application program.

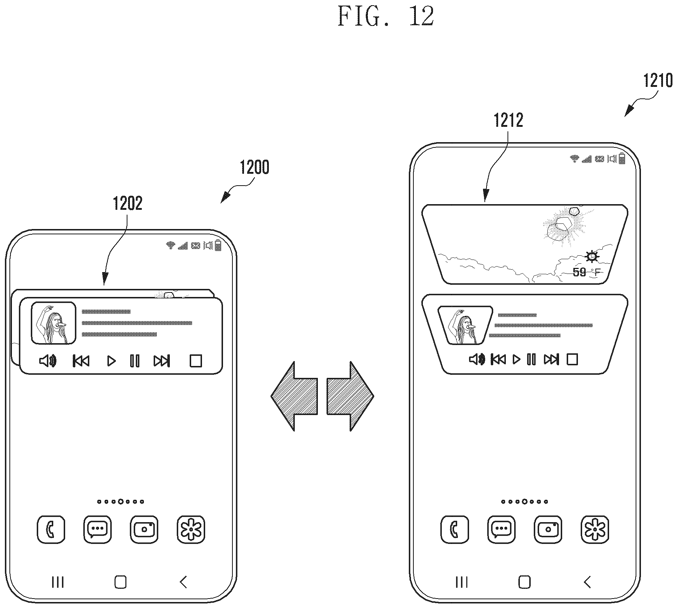

FIG. 12 shows an example of changing a display method for a widget in an electronic device according to various embodiments.

According to various embodiments referring to FIG. 12, the electronic device 101 may display multiple widgets 1202 in a display region of the display 510 in a slide-in state 1200. For example, the multiple widgets 1202 may be displayed to at least a partially overlap with each other. For example, a widget may include a relatively small graphic user interface (GUI) (or relatively small window) for executing an application program and displaying an execution result of the application program. According to an embodiment, when the electronic device 101 is in the slide-in state 1200, at least a part (e.g., the second part 230b in FIG. 3A) of the display 510 may be accommodated in the second space 2201 of the second housing 220 and thus not be exposed to an external environment. For example, when the electronic device 101 is in the slide-in state 1200, at least a part (e.g., the second part 230b in FIG. 3A) of the display 510 may be deactivated or displayed by using a black screen. For example, at least a part of the display 510 may include a region remaining after excluding a display region of the display 510, in which the multiple widgets 1202 are displayed on the display 510.

According to various embodiments, when the electronic device 101 is changed to a slide-out state 1210, the electronic device may continuously or periodically detect a variance of a display area of the display 510. The electronic device 101 may reflect an angle coefficient corresponding to the variance of the display area of the display 510 to change a display method for the widgets 1202 displayed on the display 510. According to an embodiment, the processor 500 may rotate the widgets 1202 displayed on the display 510, to correspond to an angle coefficient detected by the variance of the display area of the display 510 (as indicated by reference numeral 1212). For example, the multiple widgets 1202 may be rotated about a first axis (e.g., x axis) to correspond to the angle coefficient (as indicated by reference numeral 1212). The display 510 may additionally display at least a part of the multiple widgets 1202, which has not been displayed on the display 510, based on the rotation of the multiple widgets 1202.

According to various embodiments, while the display area of the display 510 is being changed, the electronic device 101 may continuously or periodically reflect an angle coefficient corresponding to the variance of the display area of the display 510 to change a display method for the widgets 1202 displayed on the display 510.

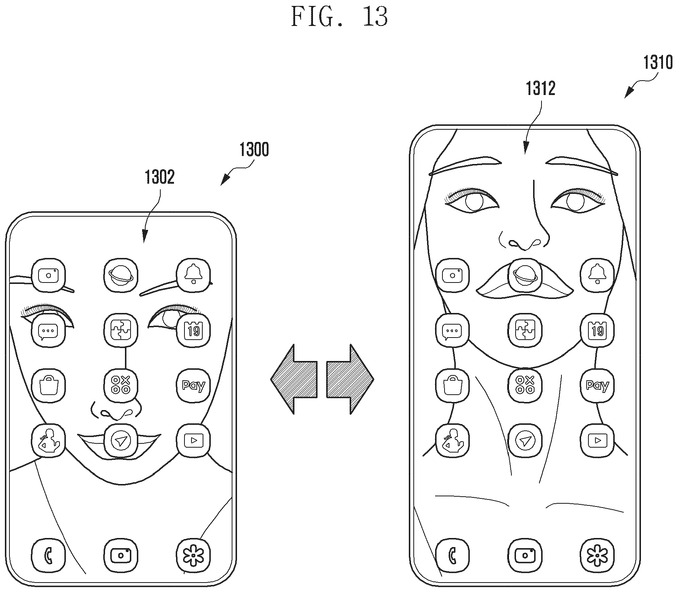

FIG. 13 shows an example of changing a display method for a wallpaper in an electronic device according to various embodiments.

According to various embodiments referring to FIG. 13, the electronic device 101 may display a wallpaper 1302 (e.g., a background screen or background image) in a display region of the display 510 in a slide-in state 1300. According to an embodiment, when the electronic device 101 is in the slide-in state 1300, at least a part (e.g., the second part 230b in FIG. 3A) of the display 510 may be accommodated in the second space 2201 of the second housing 220 and thus not be exposed to an external environment. For example, when the electronic device 101 is in the slide-in state 1300, at least a part (e.g., the second part 230b in FIG. 3A) of the display 510 may be deactivated or displayed by using a black screen. For example, at least a part of the display 510 may include a region remaining after excluding a display region of the display 510, in which the wallpaper 1302 is displayed on the display 510.

According to various embodiments, when the electronic device 101 is changed to a slide-out state 1310, the electronic device may continuously or periodically detect a variance of a display area of the display 510. The electronic device 101 may reflect an angle coefficient corresponding to the variance of the display area of the display 510 to change the wallpaper 1302 displayed on the display 510. According to an embodiment, the processor 500 may change a display angle of the wallpaper 1302 to correspond to an angle coefficient detected by the variance of the display area of the display 510 (as indicated by reference numeral 1312). For example, the wallpaper 1302 may be configured by multiple images corresponding to different angles. The processor 500 may control the display 510 to display an image, among the multiple images configuring the wallpaper 1302, which corresponds to an angle coefficient detected by the variance of the display area of the display 510. According to an embodiment, the processor 500 may control the display 510 to display a wallpaper generated based on an image obtained through a camera (not illustrated) while the display area of the display 510 is being changed. For example, the processor 500 may obtain multiple images corresponding to various angles, based on a movement distance of the first housing 210 or a predetermined time interval while the electronic device 101 is being changed from the slide-in state 1300 to the slide-out state 1310. The processor 500 may synthesize the multiple images to generate a wallpaper. The processor 500 may change a display angle 1302 or 1312 of the wallpaper to correspond to an angle coefficient detected by the variance of the display area. For example, the change of the display angle of the wallpaper may include a series of operations of displaying an image 1302 or 1312, among multiple images configuring the wallpaper, which corresponds to an angle coefficient detected by the variance of the display area of the display 510.

According to various embodiments, while the display area of the display 510 is being changed, the electronic device 101 may continuously or periodically reflect an angle coefficient corresponding to the variance of the display area of the display 510 to change the wallpaper 1302 displayed on the display 510.

According to various embodiments, the electronic device 101 may generate a wallpaper by synthesizing multiple images corresponding to various angles and obtained based on a movement distance of the first housing 210 or a predetermined time interval while being changed from the slide-out state 1310 to the slide-in state 1300.

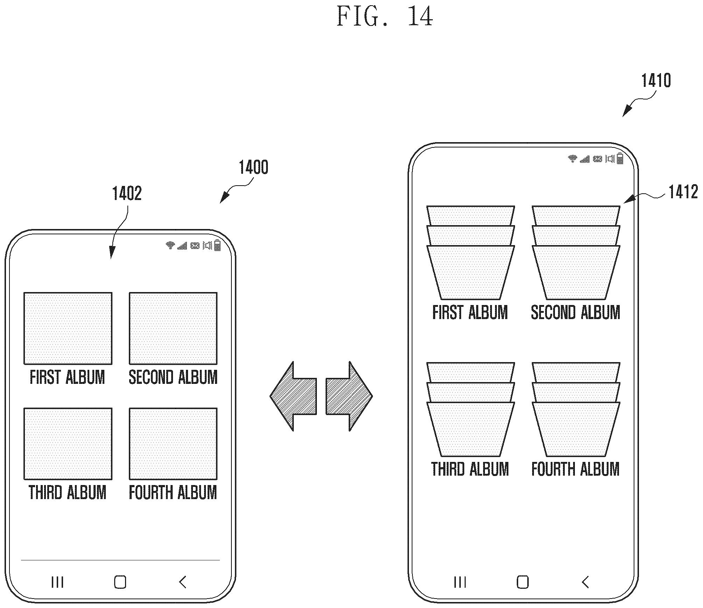

FIG. 14 shows an example of changing a display method for a service screen of an application program in an electronic device according to various embodiments.

According to various embodiments referring to FIG. 14, the electronic device 101 may display, in a slide-in state 1400, information 1402 (e.g., service screen) related to an application program executed in the electronic device 101, in a display region of the display 510. For example, the information related to the application program may include a window screen including information related to execution of the application program. For example, the window screen may include information related to at least one album including at least one image. The information related to an album may include information (e.g., thumbnail) related to a representative image among images included in the album. For example, the representative image may be configured based on an acquisition time point (or modification time point or usage time point) of each of the images included in the album. For example, the representative image may include an image, the acquisition time point (or modification time point or usage time point) of which is most recent among the images included in the album.

According to an embodiment, when the electronic device 101 is in the slide-in state 1400, at least a part (e.g., the second part 230b in FIG. 3A) of the display 510 may be accommodated in the second space 2201 of the second housing 220 and thus not be exposed to an external environment. For example, when the electronic device 101 is in the slide-in state 1400, at least a part (e.g., the second part 230b in FIG. 3A) of the display 510 may be deactivated or displayed by using a black screen. For example, at least a part of the display 510 may include a region remaining after excluding a display region of the display 510, in which the information 1402 related to the application program is displayed on the display 510.

According to various embodiments, when the electronic device 101 is changed to a slide-out state 1410, the electronic device may continuously or periodically detect a variance of a display area of the display 510. The electronic device 101 may reflect an angle coefficient corresponding to the variance of the display area of the display 510 to change a display method for the window screen 1402 related to the application program and displayed on the display 510. According to an embodiment, the processor 500 may rotate the window screen 1402 displayed on the display 510 and related to the application program, to correspond to an angle coefficient detected by the variance of the display area of the display 510 (as indicated by reference numeral 1412). For example, the window screen 1402 may be rotated about a first axis (e.g., x axis) to correspond to the angle coefficient (as indicated by reference numeral 1412). The display 510 may additionally display at least a part of the window screen 1402, which has not been displayed on the display 510, based on the rotation of the window screen 1402. For example, the display 510 may display information (e.g., thumbnail) related to multiple images included in each album included in the window screen 1402.

According to various embodiments, while the display area of the display 510 is being changed, the electronic device 101 may continuously or periodically reflect an angle coefficient corresponding to the variance of the display area of the display 510 to change a display method for the window screen 1402 displayed on the display 510 and related to the application program.

According to various embodiments, when the service screen of the application program is configured by multiple layers, the electronic device 101 may move the multiple layers to correspond to an angle coefficient detected by the variance of the display area of the display 510. For example, the multiple layers may move within different ranges, respectively, thereby providing a stereoscopic effect on the service screen of the application program.

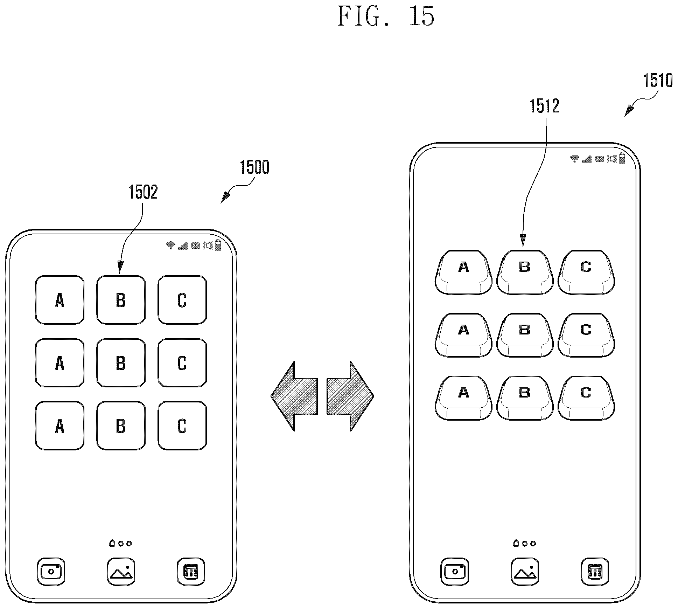

FIG. 15 shows an example of changing a display method for an item in an electronic device according to various embodiments.

According to various embodiments referring to FIG. 15, the electronic device 101 may display at least one icon 1502 in a display region of the display 510 in a slide-in state 1500. For example, the icon 1502 is an object related to an application program or a function in the electronic device 101, and the application program or function related to the icon 1502 may be executed based on an input (e.g., touch input) corresponding to the icon 1502. For example, the icon 1502 may be configured by a three-dimensional shape. According to an embodiment, when the electronic device 101 is in the slide-in state 1500, at least a part (e.g., the second part 230b in FIG. 3A) of the display 510 may be accommodated in the second space 2201 of the second housing 220 and thus not be exposed to an external environment. For example, when the electronic device 101 is in the slide-in state 1500, at least a part (e.g., the second part 230b in FIG. 3A) of the display 510 may be deactivated or displayed by using a black screen. For example, at least a part of the display 510 may include a region remaining after excluding a display region of the display 510, in which the at least one icon 1502 is displayed on the display 510.

According to various embodiments, when the electronic device 101 is changed to a slide-out state 1510, the electronic device may continuously or periodically detect a variance of a display area of the display 510. The electronic device 101 may reflect an angle coefficient corresponding to the variance of the display area of the display 510 to change a display method for the at least one icon 1502 displayed on the display 510. According to an embodiment, the processor 500 may rotate the at least one icon 1502 to correspond to an angle coefficient detected by the variance of the display area of the display 510 (as indicated by reference numeral 1512). For example, the at least one icon 1502 may be displayed stereoscopically by the rotation based on the angle coefficient.

According to various embodiments, while the display area of the display 510 is being changed, the electronic device 101 may continuously or periodically reflect an angle coefficient corresponding to the variance of the display area of the display 510 to rotate the icon 1502 displayed on the display 510.

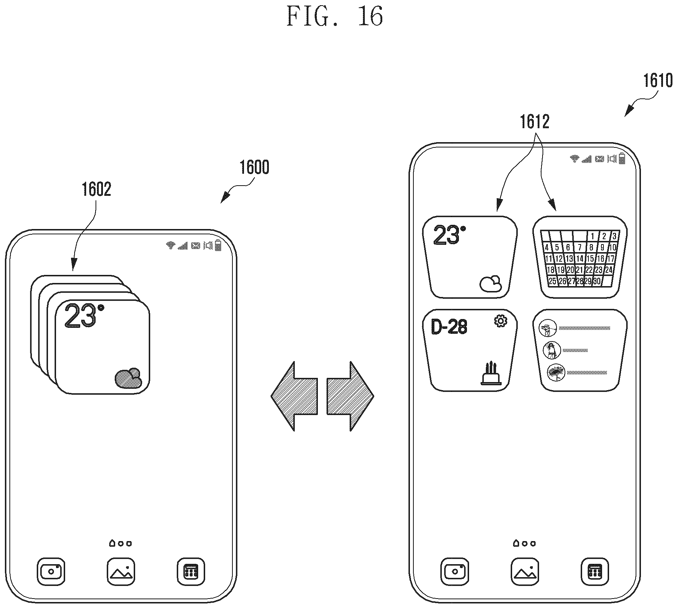

FIG. 16 shows another example of changing a display method for a widget in an electronic device according to various embodiments.

According to various embodiments referring to FIG. 16, the electronic device 101 may display multiple widgets 1602 in a display region of the display 510 in a slide-in state 1600. For example, the multiple widgets 1602 may be displayed to at least a partially overlap with each other. According to an embodiment, when the electronic device 101 is in the slide-in state 1600, at least a part (e.g., the second part 230b in FIG. 3A) of the display 510 may be accommodated in the second space 2201 of the second housing 220 and thus not be exposed to an external environment. For example, when the electronic device 101 is in the slide-in state 1600, at least a part (e.g., the second part 230b in FIG. 3A) of the display 510 may be deactivated or displayed by using a black screen. For example, at least a part of the display 510 may include a region remaining after excluding a display region of the display 510, in which the multiple widgets 1602 are displayed on the display 510.

According to various embodiments, when the electronic device 101 is changed to a slide-out state 1610, the electronic device may continuously or periodically detect a variance of a display area of the display 510. The electronic device 101 may reflect an angle coefficient corresponding to the variance of the display area of the display 510 to change a display method for the widgets 1602 displayed on the display 510. According to an embodiment, the processor 500 may change the positions of the widgets 1602 displayed on the display 510, based on a change of the display area of the display 510. For example, the widgets 1602 may be displayed not to overlap with each other when the display area of the display 510 is expanded. According to an embodiment, the processor 500 may rotate each of the widgets 1602 to correspond to an angle coefficient detected by the variance of the display area of the display 510 (as indicated by reference numeral 1612).

According to various embodiments, while the display area of the display 510 is being changed, the electronic device 101 may continuously or periodically reflect an angle coefficient corresponding to the variance of the display area of the display 510 to rotate the widgets 1602 displayed on the display 510.

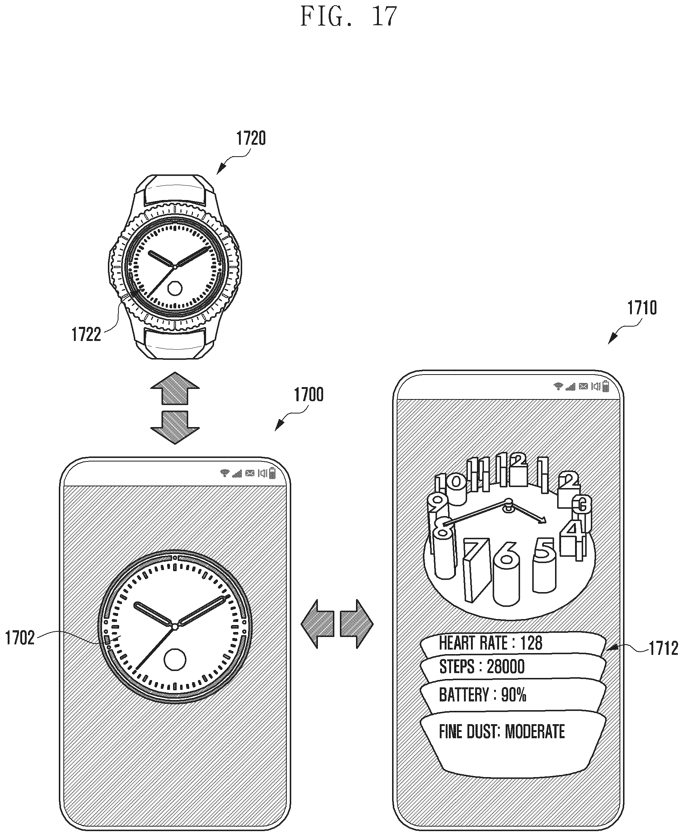

FIG. 17 shows an example of displaying of information related to an external electronic device in an electronic device according to various embodiments.

According to various embodiments referring to FIG. 17, the electronic device 101 may establish communication (e.g., direct communication) with at least one external electronic device (e.g., wearable device) 1720. The electronic device 101 may display information 1702 related to the external electronic device 1720, with which communication has been established, in a display region of the display 510 in a slide-in state 1700. For example, the information 1702 related to the external electronic device 1720 may include a service screen (e.g., watch face) 1722 of the external electronic device 1720. According to an embodiment, when the electronic device 101 is in the slide-in state 1700, at least a part (e.g., the second part 230b in FIG. 3A) of the display 510 may be accommodated in the second space 2201 of the second housing 220 and thus not be exposed to an external environment. For example, when the electronic device 101 is in the slide-in state 1700, at least a part (e.g., the second part 230b in FIG. 3A) of the display 510 may be deactivated or displayed by using a black screen. For example, at least a part of the display 510 may include a region remaining after excluding a display region of the display 510, in which the information 1702 related to the external electronic device 1720 is displayed on the display 510.

According to various embodiments, when the electronic device 101 is changed to a slide-out state 1710, the electronic device may continuously or periodically detect a variance of a display area of the display 510. The electronic device 101 may reflect an angle coefficient corresponding to the variance of the display area of the display 510 to change a display method for the information 1702 related to the external electronic device 1720 and displayed on the display 510. According to an embodiment, the processor 500 may display detailed information 1712 related to the external electronic device 1720, based on a change of the display area of the display 510. According to an embodiment, the processor 500 may rotate the detailed information 1712 related to the external electronic device 1720, to correspond to an angle coefficient detected by the variance of the display area of the display 510. For example, the information 1702 related to the external electronic device may be displayed by using one shape among two-dimensional text, a widget shape, or a three-dimensional stereoscopic shape, based on the rotation based on the angle coefficient. For example, the detailed information 1712 related to the external electronic device 1720 may include information (e.g., a heart rate, a step count, a battery state, or weather) additionally displayed by a user input (e.g., touch input and/or wheel input) on the external electronic device 1720.

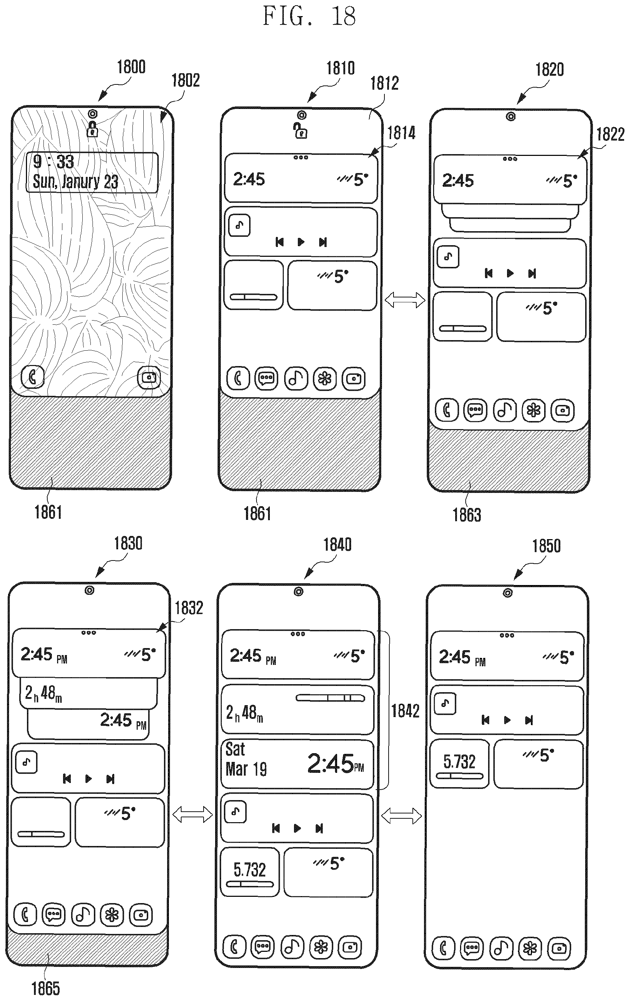

FIG. 18 shows an example of changing a display method for a widget of a stacked structure in an electronic device according to various embodiments.

According to various embodiments referring to FIG. 18, the electronic device 101 may display a lock screen 1802 in a display region of the display 510 in a slide-in state 1800 or a locked state.

According to various embodiments, the electronic device 101 may display an unlock screen 1812 in a display region of the display 510 when the electronic device 101 is unlocked in the slide-in state 1800 (as indicated by reference numeral 1810). For example, the unlock screen 1812 may include a widget 1814 of a stacked structure (e.g., stack widget). For example, the widget 1814 of the stacked structure may include multiple widgets overlapping with each other. For example, the unlock screen 1812 may include various shapes of objects other than the widget 1814 of the stacked structure. According to an embodiment, when the electronic device 101 is in the slide-in state 1800, at least a part 1861 (e.g., the second part 230b in FIG. 3A) of the display 510 may be accommodated in the second space 2201 of the second housing 220 and thus not be exposed to an external environment. For example, when the electronic device 101 is in the slide-in state 1800, the at least a part 1816 of the display 510 may be deactivated or displayed by using a black screen. For example, the at least a part 1816 of the display 510 may include a region remaining after excluding a display region of the display 510, in which the lock screen 1802 or unlock screen 1812 is displayed on the display 510. For example, when the electronic device 101 is in the slide-in state 1800, the at least a part 1816 of the display 510 may represent a virtual space that is not physically displayed.

According to various embodiments, when the electronic device 101 is changed to a slide-out state 1840 in a first direction (e.g., y-axis direction in FIG. 3A) (or a second direction (e.g., -y-axis direction in FIG. 3A)), the electronic device may change a display method for the widget 1814 of the stacked structure displayed on the display 510, based on a variance of a display area of the display 510.

According to various embodiments, when the display area of the display 510 is changed to a first size (as indicated by reference numeral 1820), the electronic device 101 may reflect an angle coefficient corresponding to the first size to change a display method for the widget 1814 displayed on the display 510. For example, the widget 1814 may be rotated about a first axis (e.g., x axis) to correspond to the angle coefficient (as indicated by reference numeral 1822). The display 510 may additionally display at least a part of at least one widget, which has not been displayed on the display 510, based on the rotation of the widget 1814 based on a first rotation amount. For example, the first rotation amount may be configured based on the first size to which the display area of the display 510 has been changed. For example, when the display area of the display 510 is changed to the first size (as indicated by reference numeral 1820), at least a part 1863 (e.g., a part of the second part 230b in FIG. 3A) of the display 510 may be accommodated in the second space 2201 of the second housing 220 and thus not be exposed to an external environment. The at least a part 1863 of the display 510 may be maintained to be in an inactive state or may be displayed by using a black screen. For example, the at least a part 1863 of the display 510 may include a region having a size smaller than that of the region 1861 accommodated in the second space 2201 of the second housing 220 in the slide-in state 1800.

According to various embodiments, when the display area of the display 510 is changed to a second size greater than the first size (as indicated by reference numeral 1830), the electronic device 101 may reflect an angle coefficient corresponding to the second size to additionally change a display method for the widget 1814 displayed on the display 510. For example, the widget 1814 may be rotated about a first axis (e.g., x axis in FIG. 3A) to correspond to the angle coefficient (as indicated by reference numeral 1832). The display 510 may additionally display at least a part of at least one widget, which has not been displayed on the display 510, based on the rotation of the widget 1814 based on a second rotation amount. For example, widget information additionally displayed based on the rotation of the widget may be displayed in a display region of the display 510, based on the rotation of the widget 1814 based on the second rotation amount such that the widget information has a relatively larger amount, compared to the rotation of the widget 1814 based on the first rotation amount. For example, the second rotation amount may be configured based on the second size to which the display area of the display 510 has been changed. For example, when the display area of the display 510 is changed to the second size (as indicated by reference numeral 1830), at least a part 1865 (e.g., a part of the second part 230b in FIG. 3A) of the display 510 may be accommodated in the second space 2201 of the second housing 220 and thus not be exposed to an external environment. The at least a part 1865 of the display 510 may be maintained to be in an inactive state or may be displayed by using a black screen. For example, the at least a part 1865 of the display 510 may include a region having a size smaller than that of the region 1863 accommodated in the second space 2201 of the second housing 220 in the state 1820 where the display area of the display 510 is the first size.

According to an embodiment, when the electronic device 101 is changed to the slide-out state 1840, the electronic device 101 may reflect an angle coefficient corresponding to a third size, which is the slide-out state 1840, to change a display method for the widget 1814 displayed on the display 510. For example, the widget 1814 may be rotated about the first axis (e.g., x axis) to correspond to the angle coefficient (as indicated by reference numeral 1842). For example, multiple widgets included in the widget 1814 of the stacked structure may be displayed in different regions, based on a third rotation amount corresponding to the third size, respectively. For example, the third size may include an area greater than the areas of the first size and the second size.

According to various embodiments, when a change of the display area of the display 510 is not detected during a designated time (as indicated by reference numeral 1850), the electronic device 101 may restore a display method for the multiple widgets to the stacked structure 1814.

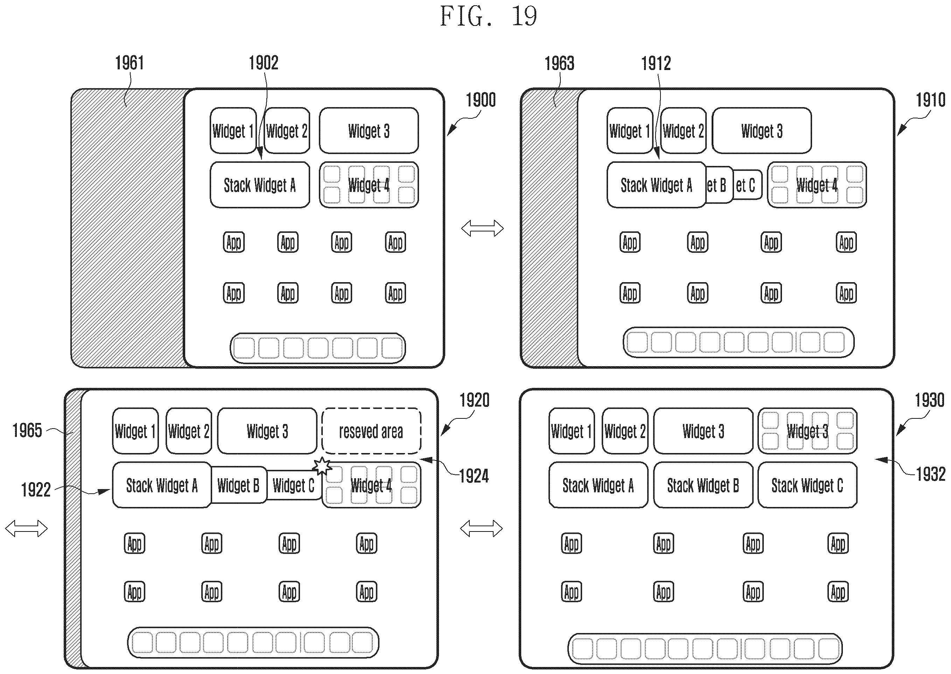

FIG. 19 shows another example of changing a display method for a widget of a stacked structure in an electronic device according to various embodiments.

According to various embodiments referring to FIG. 19, the electronic device 101 may display at least one object and/or at least one icon in a display region of the display 510 in a slide-in state 1900. For example, the at least one object may include a widget 1902 of a stacked structure. According to an embodiment, when the electronic device 101 is in the slide-in state 1900, at least a part 1961 (e.g., the second part 230b in FIG. 3A) of the display 510 may be accommodated in the second space 2201 of the second housing 220 and thus not be exposed to an external environment. For example, when the electronic device 101 is in the slide-in state 1900, the at least a part 1961 of the display 510 may be deactivated or displayed by using a black screen. For example, the at least a part 1961 of the display 510 may include a region remaining after excluding a display region of the display 510, in which the at least one object and/or at least one icon is displayed on the display 510. For example, when the electronic device 101 is in the slide-in state 1900, the at least a part 1961 of the display 510 may represent a virtual space that is not physically displayed.

According to various embodiments, when the electronic device 101 is changed to a slide-out state 1930 in a third direction (e.g., x-axis direction) (or a fourth direction (e.g., -x-axis direction)), the electronic device may change a display method for the widget 1902 of the stacked structure displayed on the display 510, based on a variance of a display area of the display 510.

According to various embodiments, when the display area of the display 510 is changed to a fourth size (as indicated by reference numeral 1910), the electronic device 101 may reflect an angle coefficient corresponding to the fourth size to change a display method for the widget 1902 displayed on the display 510. For example, the widget 1902 may be rotated about a second axis (e.g., y axis) to correspond to the angle coefficient (as indicated by reference numeral 1912). The display 510 may additionally display at least a part of at least one widget, which has not been displayed on the display 510, based on the rotation of the widget 1902 based on a fourth rotation amount. For example, the fourth rotation amount may be configured based on the fourth size to which the display area of the display 510 has been changed. For example, when the display area of the display 510 is changed to the fourth size (as indicated by reference numeral 1910), at least a part 1963 of the display 510 may be accommodated in the second space 2201 of the second housing 220 and thus not be exposed to an external environment. The at least a part 1963 of the display 510 may be maintained to be in an inactive state or may be displayed by using a black screen. For example, the at least a part 1963 of the display 510 may include a region having a size smaller than that of the region 1961 accommodated in the second space 2201 of the second housing 220 in the slide-in state 1900.

According to various embodiments, when the display area of the display 510 is changed to a fifth size greater than the fourth size (as indicated by reference numeral 1920), the electronic device 101 may reflect an angle coefficient corresponding to the fifth size to additionally change a display method for the widget 1902 displayed on the display 510. For example, the widget 1902 may be rotated about the second axis (e.g., y axis) to correspond to the angle coefficient (as indicated by reference numeral 1922). The display 510 may additionally display at least a part of at least one widget, which has not been displayed on the display 510, based on the rotation of the widget 1902 based on a fifth rotation amount. For example, widget information additionally displayed based on the rotation of the widget may be displayed in a display region of the display 510, based on the rotation of the widget 1902 based on the fifth rotation amount such that the widget information has a relatively larger amount, compared to the rotation of the widget 1902 based on the fourth rotation amount. For example, the fifth rotation amount may be configured based on the fifth size to which the display area of the display 510 has been changed. For example, the electronic device 101 may change the position of a separate widget so as to secure the display region of the widget 1902 of the stacked structure (as indicated by reference numeral 1924). For example, the separate widget may be moved to a secured position, based on expansion of the display area of the display 510. For example, when the display area of the display 510 is changed to the fifth size (as indicated by reference numeral 1920), at least a part 1965 of the display 510 may be accommodated in the second space 2201 of the second housing 220 and thus not be exposed to an external environment. The at least a part 1965 of the display 510 may be maintained to be in an inactive state or may be displayed by using a black screen. For example, the at least a part 1965 of the display 510 may include a region having a size smaller than that of the region 1963 accommodated in the second space 2201 of the second housing 220 in the state 1910 where the display area of the display 510 is the fourth size.

According to an embodiment, when the electronic device 101 is changed to the slide-out state 1930, the electronic device 101 may reflect an angle coefficient corresponding to a sixth size, which is the slide-out state 1930, to change a display method for the widget 1902 displayed on the display 510. For example, the widget 1902 may be rotated about the second axis (e.g., y axis) to correspond to the angle coefficient (as indicated by reference numeral 1932). For example, multiple widgets included in the widget 1902 of the stacked structure may be displayed in different regions, based on a sixth rotation amount corresponding to the sixth size, respectively. For example, the sixth size may include an area greater than the areas of the fourth size and the fifth size.

According to various embodiments, when a change of the display area of the display 510 is not detected during a designated time, the electronic device 101 may restore a display method for the multiple widgets to the stacked structure 1902.

According to various embodiments, the electronic device 101 may automatically change the display area of the display 510 through driving of the drive module 520. However, even in a case where the display area of the display 510 is manually changed by a user, the electronic device 101 may change a display method for an object in the same way to correspond to the change of the display area of the display 510.

According to various embodiments, an operation method of an electronic device including a flexible display having a changeable display area may include displaying at least one object on the flexible display, in case that a change of the display area of the flexible display is detected, detecting an angle coefficient corresponding to a variance of the display area of the flexible display, and changing a display method for the at least one object displayed on the flexible display, based on the angle coefficient.

According to various embodiments, the detecting of the angle coefficient may include, in case that a change of the display area of the flexible display is detected, configuring a reference angle, and detecting an angle coefficient corresponding to a variance of the display area of the flexible display, based on the reference angle.

According to various embodiments, the reference angle may be configured based on an angle corresponding to a user's gaze direction against the flexible display at a time point at which the change of the display area of the flexible display is started.

According to various embodiments, the at least one object may include at least one of a wallpaper (or a background screen), an icon, a service screen of an application, an image, or a widget.

According to various embodiments, the variance of the display area of the flexible display may be detected based on a distance by which, among a first housing and a second housing of the electronic device, which support the flexible display, the first housing has been moved from the second housing.

According to various embodiments, the changing of the display method may include rotating the at least one object displayed on the flexible display about an axis among multiple axes related to the at least one object so that the at least one object corresponds to the angle coefficient.

According to various embodiments, the axis serving as a reference for rotating the object may be configured based on at least one of a direction in which at least a part of the first housing is slid into a space of the second housing, or a direction in which the at least a part is slid out of the space.

According to various embodiments, the changing of the display method may include displaying an image corresponding to the angle coefficient among multiple images configuring the at least one object displayed on the flexible display.

According to various embodiments, the method may further include, in case that a change of the display area of the flexible display is not detected for a designated time, restoring the display method for the at least one object displayed on the flexible display.

Embodiments of the disclosure described and shown in this specification and the drawings have presented specific examples in order to easily explain the technical contents of embodiments of the disclosure and help understanding of embodiments of the disclosure, and are not intended to limit the scope of embodiments of the disclosure. Therefore, the scope of various embodiments of the disclosure should be construed to include, in addition to the embodiments disclosed herein, all changes and modifications that are derived based on the technical idea of various embodiments of the disclosure.

## Claims

1. An electronic device comprising:
a first housing;
a second housing slidably coupled to the first housing;
a flexible display which is disposed to be supported by the first housing and the second housing, and a display area of which is expanded during transition to a slide-out state from a slide-in state where at least a part of the first housing is accommodated in a space of the second housing; and
at least one processor operatively connected to the flexible display,
wherein the at least one processor is configured to:
display at least one object on the flexible display;
in case that a change of the display area of the flexible display is detected, detect an angle coefficient corresponding to a variance of the display area of the flexible display; and
change a display method for the at least one object displayed on the flexible display, based on the angle coefficient.

2. The electronic device of claim 1, wherein the at least one processor is configured to:
in case that a change of the display area of the flexible display is detected, configure a reference angle; and
detect an angle coefficient corresponding to a variance of the display area of the flexible display, based on the reference angle.

3. The electronic device of claim 2, wherein the at least one processor is configured to configure, as the reference angle, an angle corresponding to a user's gaze direction against the flexible display at a time point at which the change of the display area of the flexible display is started.

4. The electronic device of claim 1, wherein the at least one object comprises at least one of a wallpaper (or a background screen), an icon, a service screen of an application, an image, or a widget.

5. The electronic device of claim 1, further comprising a drive module configured to slide the first housing with respect to the second housing,
wherein the at least one processor is configured to operate the drive module to change the display area of the flexible display.

6. The electronic device of claim 1, wherein the at least one processor is configured to rotate the at least one object displayed on the flexible display about an axis among multiple axes related to the at least one object so that the at least one object corresponds to the angle coefficient.

7. The electronic device of claim 6, wherein the at least one processor is configured to configure an axis serving as a reference for rotating an object, based on at least one of a direction in which the at least a part of the first housing is slid into the space of the second housing, or a direction in which the at least a part is slid out of the space.

8. The electronic device of claim 1, wherein the at least one processor is configured to detect the variance of the display area of the flexible display, based on a distance by which the first housing has been moved from the second housing.

9. An operation method of an electronic device including a flexible display having a changeable display area, the method comprising:
displaying at least one object on the flexible display;
in case that a change of the display area of the flexible display is detected, detecting an angle coefficient corresponding to a variance of the display area of the flexible display; and
changing a display method for the at least one object displayed on the flexible display, based on the angle coefficient.

10. The method of claim 9, wherein the detecting of the angle coefficient comprises:
in case that a change of the display area of the flexible display is detected, configuring a reference angle; and
detecting an angle coefficient corresponding to a variance of the display area of the flexible display, based on the reference angle.

11. The method of claim 10, wherein the reference angle is configured based on an angle corresponding to a user's gaze direction against the flexible display at a time point at which the change of the display area of the flexible display is started.

12. The method of claim 9, wherein the at least one object comprises at least one of a wallpaper (or a background screen), an icon, a service screen of an application, an image, or a widget.

13. The method of claim 9, wherein the variance of the display area of the flexible display is detected based on a distance by which, among a first housing and a second housing of the electronic device, which support the flexible display, the first housing has been moved from the second housing.

14. The method of claim 9, wherein the changing of the display method comprises rotating the at least one object displayed on the flexible display about an axis among multiple axes related to the at least one object so that the at least one object corresponds to the angle coefficient.

15. The method of claim 14, wherein the axis serving as a reference for rotating the object is configured based on at least one of a direction in which at least a part of a first housing is slid into a space of a second housing, or a direction in which the at least a part is slid out of the space.
